# EUROPEAN PATENT APPLICATION

(11) **EP 4 738 394 A1**
(43) Date of publication of application: **06.05.2026**
(21) Application number: 24831623.4
(22) Date of filing: 06.06.2024
(51) Int. Cl.: H01B 13/00, H01B 1/06, H01M 4/13, H01M 4/62, H01M 10/052, H01M 10/0562

(54) **HALIDE SOLID ELECTROLYTE PRODUCTION METHOD, HALIDE SOLID ELECTROLYTE, POSITIVE ELECTRODE MATERIAL, AND BATTERY**

(30) Priority: 29.06.2023 JP 2023107591
(71) Applicant: Panasonic Intellectual Property Management Co., Ltd., Kadoma-shi, Osaka 571-0057 (JP)
(72) Inventor: KOGA, Eiichi, Kadoma-shi, Osaka 571-0057 (JP)
(74) Representative: Eisenführ Speiser
(86) International application number: PCT/JP2024/020794
(87) International publication number: WO 2025/004753

(57) **Abstract**

A production method for a solid electrolyte of the present disclosure is a production method for a halide solid electrolyte containing Li, Ti, M, and X. The M is at least one element selected from the group consisting of metal elements (excluding Li and Ti) and metalloid elements, and the X is at least one selected from the group consisting of F, Cl, Br, and I. The production method includes: (A) performing halogenation treatment on at least one Li source selected from the group consisting of a simple oxide and a simple carbonate of Li, at least one Ti source selected from the group consisting of a simple oxide and a simple carbonate of Ti, and at least one M source selected from the group consisting of a simple oxide and a simple carbonate of M, to obtain a simple halide of Li, a simple halide of Ti, and a simple halide of M, respectively; and (B) synthesizing the halide solid electrolyte using the simple halide of Li, the simple halide of Ti, and the simple halide of M.

## Description

### TECHNICAL FIELD

The present disclosure relates to a production method for a halide solid electrolyte, a halide solid electrolyte, a positive electrode material, and a battery.

### BACKGROUND ART

Patent Literature 1 discloses a halide-based solid electrolyte material. In addition, Patent Literature 2 discloses a halide-based solid electrolyte material as a solid electrolyte material that coats the surface of a positive electrode active material.

### CITATION LIST

### Patent Literature

Patent Literature 1: WO 2021/186809
Patent Literature 2: WO 2021/187391

### SUMMARY OF INVENTION

### Technical Problem

The present disclosure aims to provide a novel production method that allows a halide solid electrolyte, which has excellent ionic conductivity comparable to that of a halide solid electrolyte produced by a conventional production method, to be synthesized at a low cost.

### Solution to Problem

A production method for a halide solid electrolyte of the present disclosure is a production method for a halide solid electrolyte containing Li, Ti, M, and X, wherein
the M is at least one element selected from the group consisting of metal elements (excluding Li and Ti) and metalloid elements,
the X is at least one selected from the group consisting of F, Cl, Br, and I, and
the production method includes:
   (A) performing halogenation treatment on at least one Li source selected from the group consisting of a simple oxide and a simple carbonate of Li, at least one Ti source selected from the group consisting of a simple oxide and a simple carbonate of Ti, and at least one M source selected from the group consisting of a simple oxide and a simple carbonate of M, to obtain a simple halide of Li, a simple halide of Ti, and a simple halide of M, respectively; and
   (B) synthesizing the halide solid electrolyte using the simple halide of Li, the simple halide of Ti, and the simple halide of M.

### Advantageous Effects of Invention

The present disclosure provides a novel production method that allows a halide solid electrolyte, which has excellent ionic conductivity comparable to that of a halide solid electrolyte produced by a conventional production method, to be synthesized at a low cost.

### BRIEF DESCRIPTION OF THE DRAWINGS

FIG. 1 is a flowchart showing an example of a production method for a halide solid electrolyte according to a first embodiment.
FIG. 2 is a flowchart showing an example of a production method for a halide solid electrolyte according to a second embodiment.
FIG. 3 is a flowchart showing a modification of the production method for a halide solid electrolyte according to the second embodiment.
FIG. 4 is a flowchart showing an example of a production method for a halide solid electrolyte according to a third embodiment.
FIG. 5 illustrates a cross-sectional view of a battery 1000 according to a fourth embodiment.
FIG. 6A is a graph showing an X-ray diffraction pattern of a halide solid electrolyte after heat treatment and before pulverization treatment in a production method of Example 1.
FIG. 6B is a graph showing X-ray diffraction patterns of a halide solid electrolyte after pulverization treatment obtained in Example 1 and a halide solid electrolyte obtained in Comparative Example 1.

### DESCRIPTION OF EMBODIMENTS

Hereinafter, embodiments of the present disclosure will be specifically described with reference to the drawings.

The embodiments described below are all comprehensive or specific examples. The numerical values, shapes, materials, components, etc., shown in the following embodiments are examples, and are not intended to limit the present disclosure. In addition, among the components in the following embodiments, the components that are not described in the independent claims that represent broadest concepts are described as discretionary components.

### [First Embodiment]

Hereinafter, a production method for a halide solid electrolyte according to a first embodiment will be described.

The production method according to the first embodiment is a production method for a halide solid electrolyte containing Li, Ti, M, and X. Here, M is at least one element selected from the group consisting of metal elements (excluding Li and Ti) and metalloid elements, and X is at least one selected from the group consisting of F, Cl, Br, and I.

The production method according to the first embodiment includes:
(A) performing halogenation treatment on at least one Li source selected from the group consisting of a simple oxide and a simple carbonate of Li, at least one Ti source selected from the group consisting of a simple oxide and a simple carbonate of Ti, and at least one M source selected from the group consisting of a simple oxide and a simple carbonate of M, to obtain a simple halide of Li, a simple halide of Ti, and a simple halide of M, respectively; and
(B) synthesizing the halide solid electrolyte using the simple halide of Li, the simple halide of Ti, and the simple halide of M.

The "metalloid elements" are B, Si, Ge, As, Sb, and Te. The "metal elements" are all elements included in Groups 1 to 12 of the periodic table (excluding hydrogen) and all elements included in Groups 13 to 16 of the periodic table (excluding B, Si, Ge, As, Sb, Te, C, N, P, O, S, and Se). That is, the "metal elements" are a group of elements that can become cations when halogen compounds and inorganic compounds are formed.

The "simple oxide" means an oxide whose cation is composed of only one type of cation. That is, a simple oxide of Li is an oxide whose cation is only a Li ion, a simple oxide of Ti is an oxide whose cation is only a Ti ion, and a simple oxide of M is an oxide whose cation is only an M ion. In the case where the halide solid electrolyte according to the first embodiment contains a plurality of elements as M, simple oxides of the respective elements are used. For example, when M is two elements, M_{A}, and M_{B}, a simple oxide of M_{A} and a simple oxide of M_{B} are used.

The "simple carbonate" means a carbonate whose cation is composed of only one type of cation. That is, a simple carbonate of Li is a carbonate whose cation is only a Li ion, a simple carbonate of Ti is a carbonate whose cation is only a Ti ion, and a simple carbonate of M is a carbonate whose cation is only an M ion. In the case where the halide solid electrolyte according to the first embodiment contains a plurality of elements as M, simple carbonates of the respective elements are used. For example, when M is two elements, M_{A} and M_{B}, a simple carbonate of M_{A} and a simple carbonate of M_{B} are used.

The "simple halide" means a halide whose cation is composed of only one type of cation. That is, a simple halide of Li is a halide whose cation is only a Li ion, a simple halide of Ti is a halide whose cation is only a Ti ion, and a simple halide of M is a halide whose cation is only an M ion. In the case where the halide solid electrolyte according to the first embodiment contains a plurality of elements as M, simple halides of the respective elements are obtained by halogenation treatment. For example, when M is two elements, M_{A}, and M_{B}, a simple halide of M_{A} and a simple halide of M_{B} are used.

In the production method according to the first embodiment, relatively inexpensive materials having excellent atmospheric stability such as simple oxides and simple carbonates are used as raw materials serving as the Li source, the Ti source, and the M source. Therefore, with the production method according to the first embodiment, a halide solid electrolyte having excellent ionic conductivity comparable to that of a halide solid electrolyte produced by a conventional production method can be synthesized stably at a low cost.

Moreover, the simple oxides and the simple carbonates used as the Li source, the Ti source, and the M source are generally materials harder than halides. Therefore, in the production method according to the first embodiment, unlike the case where a halide is used as a raw material, the raw materials can be easily pulverized and micronized. Therefore, if the raw materials are micronized and then halogenation treatment and synthesis of a solid electrolyte are performed, a fine halide solid electrolyte can be easily produced. As described above, the production method according to the first embodiment uses raw materials that are easy to handle in micronizing such as pulverizing and is therefore also suitable for producing a fine halide solid electrolyte.

The simple halide of Li, the simple halide of Ti, and the simple halide of M obtained in the above (A) may contain oxygen ions as anions in the halogen elements. For example, the simple halide of Ti may include a fluorinated oxide containing oxygen and fluorine ions as anions, such as TiF₂O. Accordingly, the solid electrolyte can be synthesized without using unstable halides, such as TiF₄, which easily evaporate even when handled at room temperature, so that compositional deviation of the solid electrolyte can be suppressed. Thus, a solid electrolyte having a desired composition and characteristics can be produced with good reproducibility and high accuracy (i.e., high purity). NH₄F, which is an example of an F source for substituting oxygen contained in TiF₂O with F, may be additionally supplied in a subsequent step of a solid-phase reaction to completely fluorinate TiF₂O, so that the remaining oxygen is substituted with fluorine. NH₄F for completely fluorinating TiF₂O in such a step may be caused to include a predetermined halogen-containing substance and be uniformly mixed with each halide in a mixing step before firing. As TiF₂O is fluorinated (in a highly stable form such as a halogenated oxide), a solid-phase reaction with LiF and AlF₃ occurs, and the solid electrolyte according to the embodiment is synthesized. Therefore, a problem of compositional variations caused by evaporation and deliquescence of TiF₄ is suppressed, so that the generation of undesired precipitate phases is suppressed and the halide solid electrolyte can be synthesized with high composition accuracy.

The above (A) may include:
(A-0) pulverizing at least one selected from the group consisting of the Li source, the Ti source, and the M source; and
(A-1) performing halogenation treatment on the Li source, the Ti source, and the M source after the above (A-0), to obtain a simple halide of Li, a simple halide of Ti, and a simple halide of M, respectively.

By the above (A) including the above (A-0) and the above (A-1), that is, pulverizing and micronizing the Li source, the Ti source, and the M source, which are starting raw materials, performing halogenation treatment on each source, and performing synthesis in the above (B) using the halides obtained thus, a fine halide solid electrolyte can be produced more easily at a lower cost than with a conventional production method using relatively soft halides as raw materials.

In the above (A), the halogenation treatment on the Li source, the Ti source, and the M source may be performed at a temperature of 150°C or higher. Accordingly, by the halogenation treatment at a relatively low temperature, the Li source, the Ti source, and the M source can be converted into halides before becoming hard due to sintering or becoming larger due to grain growth. Therefore, such a heat treatment temperature is suitable for producing a fine halide solid electrolyte. Furthermore, the obtained solid electrolyte is easy to pulverize, and thus contamination during pulverization can be suppressed. The temperature of the halogenation treatment is suitably, for example, 150°C or higher and 450°C or lower. Thus, a useful halide solid electrolyte that can be micronized and in which deterioration of characteristics is suppressed, can be obtained. The heat treatment for the halogenation treatment can be performed in any atmosphere suitable for conversion to various halides, such as air, nitrogen, and a reducing atmosphere.

In the above (A), the halogenation treatment on the Li source, the Ti source, and the M source may be performed, for example, by performing heat treatment on a halogen-containing substance having thermal decomposition properties.

By performing the halogenation treatment through heat treatment on the halogen-containing substance having thermal decomposition properties, the simple oxides or simple carbonates used as the Li source, the Ti source, and the M source can be converted into halides with good productivity through control of the heat treatment conditions. The control of the heat treatment conditions means, for example, control of the temperature or selection of a heat treatment atmosphere. The heat treatment atmosphere is, for example, air, nitrogen, or a reducing gas. In addition, the temperature or progress of halogenation can also be controlled by using a plurality of halogen-containing substances having thermal decomposition properties (e.g., thermal decomposition temperature, time required for thermal decomposition, etc.) different from each other, or by adjusting the particle diameter of the halogen-containing substance. Therefore, various oxides and carbonates can be stably and uniformly halogenated.

In the case where a halogen-containing substance having thermal decomposition properties is used for the halogenation treatment on the Li source, the Ti source, and the M source, in the production method according to the first embodiment, the above (A) may include:
(A-1-1) mixing the Li source and a first halogen-containing substance, mixing the Ti source and a second halogen-containing substance, and mixing the M source and a third halogen-containing substance; and
(A-1-2) performing halogenation treatment on the Li source, the Ti source, and the M source by respectively performing heat treatment on a first mixture including the Li source and the first halogen-containing substance, a second mixture including the Ti source and the second halogen-containing substance, and a third mixture including the M source and the third halogen-containing substance, which are obtained in the above (A-1-1).

In the production method according to the first embodiment, by performing the above (A-1-1) and the above (A-1-2), the heat treatment for the halogenation treatment can be performed on a homogeneous mixture obtained by mixing the starting raw materials and the halogen-containing substance. In addition, the contact areas between the starting raw materials and the halogen-containing substance can be increased. Therefore, in this case, the halogenation of the starting raw materials can be promoted uniformly and evenly throughout the Li source, the Ti source, and the M source, respectively. Therefore, a homogeneous halide solid electrolyte having excellent characteristics can be obtained.

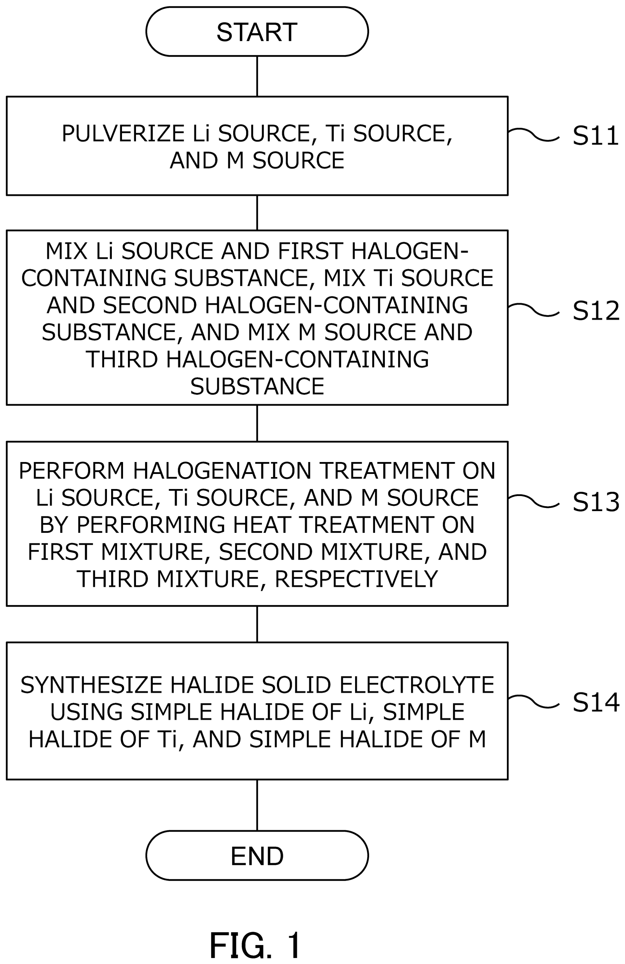

FIG. 1 is a flowchart showing an example of the production method for a halide solid electrolyte according to the first embodiment. Here, an example of a production method in which the above (A-0) and the above (A-1) are performed will be described as an example of the production method according to the first embodiment. In the example described here, the above (A-1-1) and the above (A-1-2) are performed as the above (A-1).

As shown in FIG. 1, in an example of the production method according to the first embodiment, first, as a step corresponding to the above (A-0), at least one selected from the group consisting of a Li source, a Ti source, and an M source is pulverized. In this example, for example, all of the Li source, the Ti source, and the M source are pulverized (S11). Next, as a step corresponding to the above (A-1-1), the Li source and a first halogen-containing substance are mixed, the Ti source and a second halogen-containing substance are mixed, and the M source and a third halogen-containing substance are mixed (S12). Next, as a step corresponding to the above (A-1-2), halogenation treatment is performed on the Li source, the Ti source, and the M source by respectively performing heat treatment on the obtained first mixture including the Li source and the first halogen-containing substance, the obtained second mixture including the Ti source and the second halogen-containing substance, and the obtained third mixture including the M source and the third halogen-containing substance (S13). Next, as a step corresponding to the above (B), a halide solid electrolyte is synthesized using the obtained simple halide of Li, simple halide of Ti, and simple halide of M (S14). Accordingly, a halide solid electrolyte containing Li, Ti, M, and X is obtained.

Hereinafter, the starting raw materials (i.e., the Li source, the Ti source, and the M source), the halogen-containing substance, and the steps corresponding to the above (A-0), the above (A-1-1), the above (A-1-2), and the above (B), respectively, will be specifically described.

### <Starting Raw Materials (Li Source, Ti Source, and M Source)>

Each of the Li source, the Ti source, and the M source, which are starting raw materials, is at least one selected from the group consisting of a simple oxide and a simple carbonate, as described above.

As the Li source, for example, Li₂O and Li₂CO₃ can be used.

As the Ti source, for example, TiO₂ can be used.

As the M source, a simple oxide of M and a simple carbonate of M can be used. M may include Al. When M includes Al, a halide solid electrolyte having high ionic conductivity can be obtained. M may be Al. For example, in the case where M includes Al, Al₂O₃ can be used as an Al source.

The Li source, the Ti source, and the M source may be, for example, in particle form. Accordingly, the halogenation of the Li source, the Ti source, and the M source (i.e., substitution of oxygen element by halogen element) proceeds from the particle surface, and the reaction area increases as the paths of these reactions shorten. Therefore, it becomes easier for the halogenation of the raw materials and the solid-phase reaction (synthesis reaction in the step corresponding to the above (B)) to proceed. Accordingly, the Li source, the Ti source, and the M source can be halogenated uniformly in a short time. In addition, intermediate products that are produced when the reaction is insufficient, and reaction residues such as carbonates can be reduced, so that a homogeneous halide solid electrolyte having excellent characteristics can be obtained. Moreover, in this case, the reactivity of halogenation and the like is good, so that the solid electrolyte can be synthesized in a short time at a low temperature, and the productivity is also excellent.

The smaller the particle sizes of the Li source, the Ti source, and the M source are, the more suitable these sources are for halogenation, but these sources may be more likely to aggregate or powders thereof may be more likely to fuse together during halogenation. Therefore, an appropriate particle size and particle shape may also be selected in view of handling. The average particle diameters of the particles of the Li source, the Ti source, and the M source may be, for example, 1 µm or less.

The average particle diameters of the Li source, the Ti source, and the M source are the median diameters of the Li source, the Ti source, and the M source and each mean a particle diameter (d50) equivalent to 50% of the cumulative volume obtained from a particle size distribution measured on a volume basis by a laser diffraction scattering method. The same applies to the average particle diameter of the halogen-containing substance specified in this description.

### <Halogen-Containing Substance>

The halogen-containing substance has thermal decomposition properties. For example, in the case where the halide solid electrolyte to be produced contains F as the halogen element X, a fluorine-containing substance serving as a fluorine source is used as the halogen-containing substance.

The thermal decomposition-starting temperature of the halogen-containing substance to be used may be, for example, 100°C or higher and 600°C or lower. When the halogen-containing substance has a thermal decomposition-starting temperature within the above temperature range, the halogen-containing substance can have stability in storage and handling such as mixing, and the obtained halide solid electrolyte can be prevented from becoming excessively hard.

The halogen element X may include F or may be F. Accordingly, a halide solid electrolyte having excellent stability (in particular, excellent electrochemical stability and heat resistance) and having high ionic conductivity can be obtained.

The halogen-containing substance may be, for example, in particle form. Accordingly, the thermal decomposition properties of the halogen-containing substance are improved, and the contact areas between the Li source, the Ti source, and the M source, which are the starting raw materials, and the halogen-containing substance are increased. Therefore, the halogenation of the Li source, the Ti source, and the M source can be efficiently performed. In addition, the halogenation reaction can be controlled by the particle shape of the halogen-containing substance. For example, the temperature and rate of the halogenation of the Li source, the Ti source, and the M source can be increased, for example, by making the particles of the halogen-containing substance smaller. Furthermore, by mixing the Li source, the Ti source, and the M source with the particulate halogen-containing substance, uniform halogenation of the Li source, the Ti source, and the M source is enabled. In addition, precise control of the halogen amount is enabled. Thus, the synthesis of the desired halide solid electrolyte is enabled. Moreover, the halogen-containing substance can be used in an amount required for the halogenation of the Li source, the Ti source, and the M source, so that excess halogen gas emission can be suppressed. Therefore, the environmental impact is reduced and the influence on corrosion of a furnace material, etc., is also reduced.

The halogen-containing substance, for example, may have an average particle diameter of 0.5 µm or more and 500 µm, may have an average particle diameter of 0.5 µm or more and 150 µm or less, may have an average particle diameter of 0.5 µm or more and 200 µm or less, or may have an average particle diameter of 0.5 µm or more and 100 µm or less. As with the Li source, the Ti source, and the M source, the halogen-containing substance may also have any particle diameter and shape.

The average particle diameter of the halogen-containing substance may be larger than the average particle diameters of the Li source, the Ti source, and the M source, which are starting raw materials. This results in a state where the surface areas of the Li source, the Ti source, and the M source are larger than that of the halogen-containing substance, that is, the surface exposure areas (i.e., exposure areas) of the Li source, the Ti source, and the M source are larger. Therefore, it becomes easier for halogenation to proceed from the particle surfaces of the Li source, the Ti source, and the M source, so that homogeneous halides of Li, Ti, and M can be obtained. The average particle diameter of the halogen-containing substance may be 5 µm or more and 100 µm or less, may be 5 µm or more and 20 µm or less, may be 50 µm or more and 200 µm or less, may be 50 µm or more and 100 µm or less, and may be 50 µm or more and 20 µm or less. The average particle diameter of the halogen-containing substance can be adjusted as appropriate in consideration of the temperature or reactivity of halogenation. For example, by increasing the average particle diameter of the halogen-containing substance, the heat treatment temperature for the halogenation treatment is increased.

The halogen-containing substance may include an ammonium salt. The thermal decomposition of the ammonium salt starts at a relatively low temperature (e.g., about 150°C). Therefore, the ammonium salt is less likely to remain as an unnecessary inorganic component in the finally obtained halide solid electrolyte and can halogenate the Li source, the Ti source, and the M source at a low temperature. The halogenation at a low temperature is, for example, conversion of the Li source, the Ti source, and the M source into halides in the range of about 150°C or higher and 600°C or lower. Therefore, by using the ammonium salt as the halogen-containing substance, the halide solid electrolyte can be synthesized without causing sintering to proceed excessively. Therefore, a halide solid electrolyte having excellent pulverizability can be synthesized. Since the halide solid electrolyte having excellent pulverizability can be synthesized as described above, using the ammonium salt as the halogen-containing substance is also suitable for producing a fine halide solid electrolyte. Furthermore, the energy for synthesis is saved, and the heating and cooling times are reduced, so that the productivity is also improved. Moreover, since synthesis at a low temperature is possible, the durability of the furnace material is improved, and the running cost and replacement frequency of a synthetic member are also significantly reduced. As the halogen-containing substance, the ammonium salt by itself may be used.

The ammonium salt may include NH₄F. NH₄F is a highly decomposable fluorine source and can act effectively on fluorination of the Li source, the Ti source, and the M source. Therefore, NH₄F can convert the Li source, the Ti source, and the M source into fluorides without leaving any inorganic substances while being thermally decomposed at a low temperature (e.g., about 150°C) and a high decomposition rate. Ammonium salts of other halogen elements, such as NH₄Cl and NH₄Br, also have thermal decomposition properties and thus can be similarly used as a halogen source.

The halogen-containing substance may include a resin. By including a resin as the halogen-containing substance, the halogen-containing substance can halogenate the Li source, the Ti source, and the M source without leaving any inorganic substances while being thermally decomposed at a relatively high temperature (e.g., about 450°C or higher and 600°C or lower). Therefore, the method in which the resin is included as the halogen-containing substance is suitable for the case where it is desired to carry out the halogenation of the Li source, the Ti source, and the M source at a relatively high temperature (e.g., about 450°C or higher and 600°C or lower).

An example of the resin used as the halogen-containing substance is a fluorine resin. For example, polytetrafluoroethylene (PTFE), polyvinylidene fluoride (PVDF), etc., can be used. The fluorine resin such as PTFE can halogenate the Li source, the Ti source, and the M source while being thermally decomposed at a relatively high temperature (e.g., about 450°C or higher and 600°C or lower). Therefore, the method in which the fluorine resin is included as the halogen-containing substance is suitable for the case where it is desired to carry out the halogenation at a relatively high temperature (e.g., about 450°C or higher and 600°C or lower).

The halogen-containing substance may include, for example, a substance from which the inorganic components generated by thermal decomposition during the heat treatment in the above (A), other than halogen elements, are substantially not incorporated into the produced halide solid electrolyte. For the halogen-containing substance, it is required that while the halogen elements generated by thermal decomposition during the heat treatment in the above (A) are replacing the oxygen elements of the Li source, the Ti source, and the M source, the other components are not incorporated as inorganic residues into the finally obtained halide solid electrolyte. By using, as the halogen-containing substance, a substance from which the inorganic components generated by thermal decomposition during the heat treatment, other than halogen elements, are substantially not incorporated into the finally obtained halide solid electrolyte, the incorporation of inorganic residues into the halide solid electrolyte can be suppressed, and the desired halide solid electrolyte can be obtained. Examples of the halogen-containing substance from which the inorganic components generated by thermal decomposition during the heat treatment, other than halogen elements, are substantially not incorporated into the finally obtained halide solid electrolyte, include substances from which inorganic components generated by thermal decomposition during heat treatment, other than halogen elements, are converted into gas and discharged. Here, in this description, "the inorganic components generated by thermal decomposition during the heat treatment, other than halogen elements, are substantially not incorporated into the produced halide solid electrolyte" means that the content ratio of the inorganic components in the halide solid electrolyte is 0.5 mass% or less.

The halogen-containing substance may include a plurality of types of halogen-containing compounds. For example, both the ammonium salt and the fluorine resin can be used as the halogen-containing substance. A mixture of a plurality of types of halogen-containing compounds having particle diameters different from each other may be used. Accordingly, the temperature and the reactivity of the halogenation of the Li source, the Ti source, and the M source can be adjusted. Therefore, for example, the temperature range where the halogen-containing substance acts as a halogen source can be controlled to be wide, and thus the temperatures at which the Li source, the Ti source, and the M source are converted into the halides can be controlled over a wide range. Therefore, it becomes easy to obtain the desired halide solid electrolyte.

The amount of the used halogen-containing substance only has to be sufficient to halogenate the entire amount of the compound to be halogenated and is not particularly limited. For example, when the molar amount of the halogen-containing substance for halogenating all of the compound stoichiometrically (i.e., the molar amount equivalent stoichiometrically, in other words, the molar amount required to completely replace the anion of the compound to be halogenated with a halogen anion such as F) in the reaction of halogenating the compound to be halogenated is defined as 100%, the amount of the halogen-containing substance may be, for example 103% or more and 150% or less, may be 103% or more and 130% or less, or may be 103% or more and 110% or less.

### <(A-0)>

In (A-0), at least one selected from the group consisting of the Li source, the Ti source, and the M source is pulverized. All of the Li source, the Ti source, and the M source may be pulverized.

By pulverizing and micronizing the Li source, the Ti source, and the M source, each of which is a simple oxide and/or a simple carbonate, powders of the halides obtained by halogenating the Li source, the Ti source, and the M source also become fine particles of the same order of size, and further, the halide solid electrolyte to be produced can also be obtained in the form of fine particles. Therefore, in the case where a fine particle halide solid electrolyte is to be produced, the Li source, the Ti source, and the M source may be pulverized and micronized. The Li source, the Ti source, and the M source may be pulverized such that the average particle diameters thereof are 1 µm or less, for example.

The Li source, the Ti source, and the M source, each of which is a simple oxide and/or a simple carbonate, generally have superior atmospheric stability compared to halide raw materials (e.g., LiF, TiF₄, and AlF₃) and can therefore be handled in a normal atmospheric environment. Therefore, process fluctuations of the raw materials during production can be suppressed. Here, the "process fluctuations of the raw materials" mean fluctuations in the state of the raw materials caused by fluctuations in the external environment, such as temperature and humidity, in each step during production (e.g., seasonal fluctuations). Since process fluctuations are suppressed in the Li source, the Ti source, and the M source each of which is a simple oxide and/or a simple carbonate, the Li source, the Ti source, and the M source each of which is a simple oxide and/or a simple carbonate can also be stably and easily pulverized using a ball mill or a media agitation mill, unlike soft halide raw materials. Therefore, by pulverizing the Li source, the Ti source, and the M source into fine particles in advance, the halide solid electrolyte to be produced can be made into fine particles, and a thin layer can also be produced using the solid electrolyte. Furthermore, since the simple halides of Li, Ti, and M are fine particles, reaction non-uniformity is also reduced in the solid-phase reaction in the synthesis step in the above (B), so that a more homogeneous solid electrolyte is synthesized than in the case where halide raw materials are used as starting raw materials as in the conventional case.

<(A-1)>
(A-1-1) In (A-1), after the above (A-0), halogenation treatment is performed on the Li source, the Ti source, and the M source to obtain the simple halide of Li, the simple halide of Ti, and the simple halide of M, respectively. At this time, for example, the Li source and the first halogen-containing substance are mixed, the Ti source and the second halogen-containing substance are mixed, and the M source and the third halogen-containing substance are mixed. The first halogen-containing substance, the second halogen-containing substance, and the third halogen-containing substance are used for the same purposes as the above-described "halogen-containing substance". Therefore, as the first halogen-containing substance, the second halogen-containing substance, and the third halogen-containing substance, the materials described above as the "halogen-containing substance" can be used. The first halogen-containing substance, the second halogen-containing substance, and the third halogen-containing substance may be the same as each other or may be materials different from each other.

By performing a step of uniformly mixing the Li source and the first halogen-containing substance, the Ti source and the second halogen-containing substance, and the M source and the third halogen-containing substance as a preliminary step before the halogenation treatment as described above, the conversion of the Li source, the Ti source, and the M source into the halides can be caused to occur uniformly. Accordingly, homogeneous simple halides of Li, Ti, and M are obtained, and as a result, the halide solid electrolyte to be finally obtained can be synthesized homogeneously.

For example, powders of the Li source and the first halogen-containing substance are mixed at the desired ratio. The powders of the Li source and the first halogen-containing substance only have to be mixed, for example, by a dry method such that these powders are homogeneous. For example, these powders may be uniformly mixed by repeated mixing with a spatula, or may be mixed using a mortar and a pestle, a grinding machine, a dry mixing device such as a V-blender, or the like. Alternatively, these powders may be mixed using a medium such as zirconia balls. As long as these powders can be mixed uniformly, any mixing means may be used. Uniformity can be evaluated, for example, using energy dispersive X-ray spectroscopy (EDS) or an electron probe microanalyzer (EPMA). For example, uniformity can be confirmed by observing a compositional mapping image. Powders of the Ti source and the second halogen-containing substance and powders of the M source and the third halogen-containing substance can also be mixed by the same method.

### (A-1-2)

In (A-1-2), halogenation treatment is performed on the Li source, the Ti source, and the M source by respectively performing heat treatment on the first mixture including the Li source and the first halogen-containing substance, the second mixture including the Ti source and the second halogen-containing substance, and the third mixture including the M source and the third halogen-containing substance, which are obtained in the above (A-1-1).

For the heat treatment, a general electric furnace may be used. If necessary, an atmosphere for the heat treatment may be selected, and the heat treatment may be performed in atmospheric air, an inert gas atmosphere (e.g., nitrogen gas or argon gas), or a reducing gas (e.g., hydrogen or carbon dioxide). The synthesized halide is normally obtained as a powder.

### <(B)>

In the above (B), a halide solid electrolyte is synthesized using the simple halide of Li, the simple halide of Ti, and the simple halide of M which are obtained in the above (A).

The above (B) may include, for example,
(B-1) mixing the simple halide of Li, the simple halide of Ti, and the simple halide of M which are obtained in the above (A), and
(B-2) synthesizing a halide solid electrolyte by causing a solid-phase reaction of the simple halide of Li, the simple halide of Ti, and the simple halide of M.

### (B-1)

The mixing of the simple halide of Li (e.g., LiF), the simple halide of Ti (e.g., TiF₂O), and the simple halide of M (e.g., AlF₃) is a process in which these simple halides are mixed uniformly such that the composition ratio of the halide solid electrolyte to be produced is achieved. By uniformly mixing the simple halide of Li, the simple halide of Ti, and the simple halide of M, which are obtained in the above (A), such that these simple halides are homogenous as described above, a uniform mixed powder can be obtained. By, in (B-2) described later, causing a solid-phase reaction of the mixed powder mixed uniformly as described above, a homogeneous halide solid electrolyte can be synthesized.

The powders of the simple halide of Li, the simple halide of Ti, and the simple halide of M may be in any shape, and may be, for example, powders having an average particle diameter of 0.1 µm or more and 10 µm or less. The average particle diameters of the simple halide of Li, the simple halide of Ti, and the simple halide of M are not limited to the above range, and powders having any average particle diameter and any shape may be used from the viewpoint of handling in the mixing step and control of the solid-phase reaction. The smaller the average particle diameter is, the lower the temperature of the solid-phase reaction can be made.

The mixing of the powders of the simple halide of Li, the simple halide of Ti, and the simple halide of M may be general dry mixing or general wet mixing, and these powders only have to be mixed such that these powders are homogeneous. For example, a mixture of the powders of the simple halide of Li, the simple halide of Ti, and the simple halide of M may be uniformly mixed by repeated mixing with a spatula, may be mixed using a mortar and a pestle, or may be mixed using a grinding machine, a dry mixing device such as a V-blender, or the like. Alternatively, these powders may be mixed using a medium such as zirconia balls. Any method may be used as long as the powders of the simple halide of Li, the simple halide of Ti, and the simple halide of M can be uniformly mixed. Uniformity can be evaluated, for example, using EDS or EPMA. For example, uniformity can be confirmed by observing a compositional mapping image.

### (B-2)

A halide solid electrolyte is synthesized by causing a solid-phase reaction of the simple halide of Li, the simple halide of Ti, and the simple halide of M. For example, a solid-phase reaction of the simple halide of Li, the simple halide of Ti, and the simple halide of M can be caused by performing heat treatment on a mixture including the simple halide of Li, the simple halide of Ti, and the simple halide of M.

For the heat treatment for the solid-phase reaction, a general electric furnace may be used. If necessary, an atmosphere for the heat treatment may be selected, and the heat treatment may be performed in atmospheric air, an inert gas atmosphere (e.g., nitrogen gas or argon gas), or a reducing gas (e.g., hydrogen or carbon dioxide). The synthesized halide solid electrolyte is normally obtained as a powder, but when the heat treatment is performed at a temperature equal to or higher than the melting point thereof, the halide may be obtained as a block-like mass formed by the adhesion of melts, sintered bodies, or powder.

In the heat treatment, for example, the above-described uniformly mixed mixture is placed in a heat-resistant container (sagger) made of alumina, and the mixture is fired using a firing furnace in any atmosphere. For example, an inert gas such as nitrogen gas is caused to flow into the furnace, and heat treatment is performed in the atmosphere furnace, for example, at a temperature of 150°C or higher and 600°C or lower, for example, for a time of 1 hour or longer and 40 hours or shorter, while the gases generated by halogenation (e.g., ammonium, hydrogen chloride, carbon dioxide, etc.) are discharged, to cause a solid-phase reaction of the simple halide of Li, the simple halide of Ti, and the simple halide of M. As described above, by introducing the gas into the firing furnace and discharging the gases therefrom, unnecessary reactive gas components, etc., are prevented from remaining in the furnace, that is, in the halide solid electrolyte.

It is preferable that the inert gas is introduced into the furnace such that the inert gas does not directly hit the sagger in which the mixture has been placed. Instead of the inert gas, atmospheric air may be introduced into the furnace. A plate larger than a gas introduction port is installed between the gas introduction port and the sagger. The thickness of the plate may be such a thickness that the plate is not damaged by gas flow or handling. For example, it is more preferable to partially shield by merely standing a plate such as an alumina plate upright. As a result of shielding between the gas introduction port and the sagger as described above, the gas comes into contact with the sagger after flowing around the shielding plate. By bringing the gas into indirect contact with the sagger after bypassing as described above, a problem that the temperature is decreased in the portion where the gas directly hits and the temperature distribution in the sagger is increased is reduced. Accordingly, nonuniformity of the distribution of a progressive state (i.e., variation in progressive state) for the solid-phase reaction of the simple halide of Li, the simple halide of Ti, and the simple halide of M is suppressed.

It is preferable that the gas introduction port is installed on the bottom side of the furnace and an exhaust port is provided on the upper side (e.g., on the ceiling side or on the upper side of a side wall). Accordingly, the reactive gases can be smoothly discharged out of the furnace by utilizing the convection (bottom-to-top) flow in the furnace, so that incorporation of unnecessary residual components into the halide solid electrolyte can be reduced.

The gas to be introduced may be heated and then introduced into the furnace. Accordingly, nonuniformity of the temperature distribution in the sagger can be suppressed. Therefore, the reaction for the halogenation treatment is performed uniformly, so that a more homogeneous halide solid electrolyte can be obtained.

The heat treatment temperature for the solid-phase reaction is, for example, 150°C or higher, is, for example, 150°C or higher and 600°C or lower as described above, and may be 150°C or higher and 550°C or lower or may be 250°C or higher and 550°C or lower. A temperature of 250°C or higher and 450°C or lower and a time of 2 hours or longer and 20 hours or shorter are particularly suitable, although it depends on the charge amounts of the simple halide of Li, the simple halide of Ti, and the simple halide of M, etc. The temperature and time required for synthesizing the halide solid electrolyte and the discharge time of the reactive gases may be determined as desired in view of the characteristics and powder properties of the simple halide of Li, the simple halide of Ti, and the simple halide of M.

As the furnace used for the heat treatment, a known firing furnace (e.g., electric furnace) or an atmosphere firing furnace can be used. In order to remove the atmospheric air and moisture between the particles deep in the sagger and completely replace the atmospheric air and moisture with the inert gas, the inert gas may be caused to flow after vacuum replacement. Accordingly, the influence of reactive components and moisture contained in the atmospheric air can be reduced. Vacuum replacement may be performed repeatedly.

The temperature distribution in the sagger during the heat treatment may be within the temperature distribution range of a generally used firing furnace, for example, 30°C. The temperature distribution in the sagger here is the difference between the highest temperature and the lowest temperature in the sagger.

Since the simple halide of Ti contains oxygen and a halogen as in TiF₂O, if no materials that easily evaporate, such as titanium halides (e.g., TiF₄), are included as the simple halide of Ti, or if such a material is included but the amount thereof is negligible, the heat treatment does not need to be performed in a sealed environment. A mixture including the simple halide of Li, the simple halide of Ti, and the simple halide of M may be placed in the sagger, a lid (e.g., an alumina lid) to prevent debris and foreign objects from falling may be placed if necessary, and the heat treatment may be performed. Therefore, unlike heat treatment in a conventional production method using a halide as a raw material such as a method in which the treatment amount is limited by size as in a seal-type heat treatment tool (i.e., heat treatment for causing a solid-phase reaction of the halide raw material), the heat treatment in the production method according to the first embodiment has very good productivity and workability and possesses significant industrial applicability. With the production method according to the first embodiment, a halide solid electrolyte having excellent ionic conductivity and stability (e.g., electrochemical stability and heat resistance) can be obtained since the method is such a production method having excellent productivity. **In** the case where a trace amount of titanium halide (e.g., TiF₄) is included, that trace amount of titanium halide evaporates and disappears by performing the heat treatment in an open atmosphere. Therefore, even in such a case, a halide solid electrolyte having excellent characteristics and reliability can be obtained.

The material of the sagger does not have to be alumina. As the sagger, heat-resistant containers made of various dense (e.g., relative density of 98% or more) materials such as mullite and SiC in addition to alumina can be used. From the viewpoint of the reaction between the oxide mixture, the halogen-containing substance, and the halide solid electrolyte accommodated in the sagger and the sagger, a material suitable for the sagger may be selected. In addition to the above-described materials for the sagger, those that are dense, have heat resistance, and have a small heat capacity can be used as the material of the sagger. As the shape of the sagger, various shapes such as a cylindrical shape, a prismatic shape, and a gourd shape can be used.

Here, the example in which the sagger is used for the heat treatment has been described, but the present disclosure is not limited to this. For example, a rotary furnace such as a rotary kiln may be used, or a mixed powder may be sprayed to perform heat treatment, such as spray drying.

As an example of the production method according to the first embodiment, the method in which the above (A-0), the above (A-1-1), and the above (A-1-2) are performed has been described in detail, but the step of pulverizing at least one selected from the group consisting of the Li source, the Ti source, and the M source does not necessarily have to be performed. In addition, uniformly mixing the Li source and the first halogen-containing substance to obtain the first mixture, uniformly mixing the Ti source and the second halogen-containing substance to obtain the second mixture, and uniformly mixing the M source and the third halogen-containing substance to obtain the third mixture do not necessarily have to be performed. For example, the halogen-containing substance may be added to the starting raw materials such as the Li source, and the heat treatment may be performed without sufficient mixing. In addition, it is desirable to perform the heat treatment for efficient halogenation treatment, but by adding the halogen-containing substance to the starting raw materials such as the Li source and then leaving the starting raw materials at room temperature for a long time, the halogenation of the starting raw materials such as the Li source may be performed.

In the production method according to the first embodiment, for example, an additive for promoting the halogenation reaction of the Li source, the Ti source, and the M source may be added to the Li source, the Ti source, and the M source, which are starting raw materials. In addition, an additive for promoting the solid-phase reaction of the simple halide of Li, the simple halide of Ti, and the simple halide of M may be added to the mixture including the simple halide of Li, the simple halide of Ti, and the simple halide of M. Examples of such additives include an oxide containing at least one element selected from the group consisting of P, S, Nb, Ga, Zn, Mg, K, Na, Ca, Fe, Si, and Cu.

For example, when P and S are added in small amounts in the solid-phase reaction of the simple halide of Li, the simple halide of Ti, and the simple halide of M, the temperature of the solid-phase reaction can be decreased, for example, by about 10°C to 30°C. Accordingly, the solid-phase reaction of the simple halide of Li, the simple halide of Ti, and the simple halide of M can be promoted. As the P component, a P oxide (e.g., P₂O₅) may be added. The P component and the S component may be added together, or only one of the P component and the S component may be added. The addition amount of the additive only has to be selected as appropriate according to the compound to be added, the purpose thereof, etc., and thus is not particularly limited. For example, when the P component and the S component are added for the purpose of promoting the solid-state reaction, the total of the addition amounts of the P component and the S component may be, for example, 0.001 mol% or more and 0.3 mol% or less with respect to the total of the simple halide of Li, the simple halide of Ti, and the simple halide of M.

The additives to be added as the P component and the S component may be, for example, in particle form. Depending on the particle form and dispersion state of each additive, the action effect of the additive may vary, but in general, the smaller the particle size is, the higher the obtained effects of the additives such as reaction-promoting effects are. For example, the particle diameter of each additive may be made smaller than those of the materials (e.g., the Li source, the Ti source, the M source, the simple halide of Li, the simple halide of Ti, the simple halide of M, etc.) to which the additives are added. As an example, the additive may be fine particles having a particle diameter of 0.1 µm or less and a BET of 100 m²/g or more. When the P component and S component additives are used as coarse particles or excessively added, undesired precipitate phases other than solid electrolytes may be generated and ionic conductivity may be reduced. Therefore, it is desirable to adjust the particle size and the addition amount to an appropriate size and amount. For example, it is desirable that for the P component and S component additives, the particle size and the addition amount should be set to a size and an amount with which P and S are not detected as composition phases in X-ray diffraction measurement of the finally obtained halide solid electrolyte. Accordingly, a halide solid electrolyte having high ionic conductivity can be synthesized while obtaining a reaction-promoting effect.

The halide solid electrolyte obtained by the production method according to the first embodiment is a halide solid electrolyte containing Li, Ti, M, and X. The obtained halide solid electrolyte may include, for example, a first crystal phase represented by the following composition formula (1) and a second crystal phase represented by the following composition formula (2).

Composition formula (1): Li₂TiX₆

Composition formula (2): Li₃MX₆

The halide solid electrolyte including the first crystal phase and the second crystal phase can have excellent ionic conductivity. In addition, a halide solid electrolyte having controlled characteristics such as density, strength, and electrical characteristics can be produced by changing the ratio of the composition formula (1) to the composition formula (2).

In addition, the halide solid electrolyte obtained by the production method according to the first embodiment may be in particle form, and each particle of the halide solid electrolyte may include a first crystal phase represented by the above composition formula (1) and a second crystal phase represented by the above composition formula (2). According to this configuration, the first crystal phase of Li₂TiX₆ and the second crystal phase of Li₃MX₆ are integrally included in one particle. Therefore, a halide solid electrolyte in which the first crystal phase and the second crystal phase are homogenized is realized. Accordingly, the first crystal phase and the second crystal phase can be uniformly dispersed when a compacted powder is formed using the halide solid electrolyte or the halide solid electrolyte is dispersed for preparing a slurry, so that a solid electrolyte layer having high ionic conductivity and excellent stability can be produced. The particle size and shape can be selected according to the application. Such composite particles including two crystal phases in one particle are formed by bonding together during the solid-phase reaction, for example. Therefore, it is also possible to make the composite particles finer by a method of micronizing the oxide raw materials.

In the case where the halide solid electrolyte obtained by the production method according to the first embodiment includes the first crystal phase and the second crystal phase, the halide solid electrolyte can be represented by the following composition formula (3).

Composition formula (3): xLi₂TiX₆-(1-x)Li₃MX₆

Here, in the composition formula (3), x satisfies 0 < x < 1. That is, x represents the composition ratio of Li₂TiX₆ which is the first crystal phase, and (1-x) represents the composition ratio of Li₃MX₆ which is the second crystal phase. In order to improve ionic conductivity, x may satisfy 0.05 ≤ x ≤ 0.5, for example.

In the production method according to the first embodiment, in the case where at least one selected from the group consisting of the P component additive and the S component additive is used as an additive, the obtained halide solid electrolyte contains at least one selected from the group consisting of P and S. That is, in this case, when M is Al and X is F, the halide solid electrolyte obtained by the production method according to the first embodiment contains Li, Ti, Al, and F and further contains at least one selected from the group consisting of P and S. Owing to this configuration, a homogeneous halide solid electrolyte having excellent ionic conductivity is obtained. The halide solid electrolyte obtained by the production method according to the first embodiment may consist substantially of Li, Ti, Al, F, P and S or may consist only of Li, Ti, Al, F, P, and S. "The halide solid electrolyte consists substantially of Li, Ti, Al, F, P, and S" means that the ratio of the total of the amounts of substance of Li, Ti, Al, F, P, and S to the total of the amounts of substance of all elements constituting the halide solid electrolyte is 90% or more. As an example, this ratio may be 95% or more. The above halide solid electrolyte containing Li, Ti, Al, and F and further containing at least one selected from the group consisting of P and S may include, for example, a first crystal phase represented by the following composition formula (4) and a second crystal phase represented by the following composition formula (5).

Composition formula (4): Li₂TiX₆

Composition formula (5): Li₃AlX₆

The amount of oxygen as an impurity in the halide solid electrolyte obtained by the production method according to the first embodiment may be 0.5 mass% or less. With the production method according to the first embodiment, a halide solid electrolyte into which a small amount of oxygen is incorporated can be obtained. The amount of oxygen as an impurity in the halide solid electrolyte may be, for example, 0.1 mass% or more.

As described above, in the case where the P component and the S component are added, P and S are not detected as composition phases in X-ray diffraction measurement in some cases. Even in such a case, the fact that the halide solid electrolyte contains P and S can be confirmed by high-sensitivity compositional analysis (area analysis or the like) such as an electron probe microanalyzer (EPMA). The total of the content ratios of P and S contained in the halide solid electrolyte may be, for example, 0.0003 at.% or more and 0.15 at.% or less. The content ratios of P and S can be obtained by EPMA or the like.

In the case where the halide solid electrolyte obtained by the production method according to the first embodiment includes the above first crystal phase and the above second crystal phase and further contains at least one selected from the group consisting of P and S derived from the additives, for example, P and S may be taken into both the first crystal phase (i.e., Li₂TiX₆) and the second crystal phase (i.e., Li₃MX₆).

It is desirable that the halide solid electrolyte obtained by the production method according to the first embodiment should be substantially free of TiF₄. Owing to this configuration, temporal changes in characteristics, mechanical properties, etc., of the halide solid electrolyte caused by evaporation and deliquescence of TiF₄ can be suppressed, so that a halide solid electrolyte having excellent characteristics and reliability can be realized. Here, "the halide solid electrolyte is substantially free of TiF₄" means that the content ratio of TiF₄ in the solid electrolyte is, for example, 0.5 mass% or less and desirably 0.1 mass% or less. The content ratio of TiF₄ in the halide solid electrolyte is obtained, for example, from the area ratio of a TiF₄ portion detected by performing compositional analysis for a cross-section of a compacted powder of the halide solid electrolyte or the particle surface of the solid electrolyte through elemental analysis by energy dispersive X-ray spectroscopy (EDS) or an electron probe microanalyzer (EPMA). In the case where the oxide mixture, which is a raw material of the halide solid electrolyte, contains a trace amount of titanium oxide (TiO₂), TiF₄ may be generated in the halogenation process. However, even in this case, by performing the halogenation treatment in an open atmosphere, TiF₄ can be caused to evaporate and disappear. Therefore, a halide solid electrolyte that is substantially free of TiF₄ and has excellent characteristics and reliability can be obtained.

It is desirable for the halide solid electrolyte obtained by the production method according to the first embodiment to satisfy at least one selected from the group consisting of the following (1), (2), and (3) in an X-ray diffraction pattern obtained by X-ray diffraction measurement of the above halide solid electrolyte using Cu-Kα rays.
(1) There is no peak derived from TiF₄.
(2) There is no peak derived from LiF.
(3) There is no peak derived from AlF₃.

Owing to the above configuration, the halide solid electrolyte obtained by the production method according to the first embodiment is substantially free of a compound of TiF₄, LiF, and/or AlF₃ and thus has excellent characteristics and reliability.

Here, in this description, a peak in an X-ray diffraction pattern is defined as a mountain-shaped portion in which an SN ratio (i.e., the ratio of signal S to background noise N) has a value of 1.3 or more and a full width at half maximum is 5° or less. Therefore, the fact that there is no peak means that no mountain-shaped portion recognized as a peak as described above is confirmed.

For example, in the case where the halide solid electrolyte obtained by the production method according to the first embodiment satisfies the configuration of (1) above, that is, there is no peak derived from TiF₄ in the X-ray diffraction pattern, for example, there is no peak within a range where a diffraction angle 2θ is 24° or more and 25° or less.

The halide solid electrolyte obtained by the production method according to the first embodiment can achieve high ionic conductivity comparable to that of a solid electrolyte produced using a halide as a starting raw material.

The halide solid electrolyte obtained by the production method according to the first embodiment may be in particle form. The halide solid electrolyte has relatively soft properties. Therefore, according to this configuration, a relatively soft particulate solid electrolyte can be realized. Therefore, a compacted powder of such a halide solid electrolyte can have high ionic conductivity, can have excellent stability, and can take any shape. Therefore, with the compacted powder of the halide solid electrolyte having such characteristics, a solid electrolyte layer of a battery having excellent characteristics and high reliability can be realized. The size and shape of the halide solid electrolyte particles can be selected as appropriate according to the application.

When the production method according to the first embodiment is compared with the production methods described in Patent Literature 1 and Patent Literature 2, there are differences, as described below.

Patent Literature 1 discloses a halide-based solid electrolyte containing Li, Ti, M, and F. In the solid electrolyte described in Patent Literature 1, "M" is at least one selected from the group consisting of Al and Y. All starting materials used in producing this solid electrolyte are fluorides, and a halogenated solid electrolyte is synthesized by a mechanochemical reaction in which a strong pulverizing force (impact force) is applied to the starting materials using a planetary ball mill and zirconia balls. In contrast, in the production method for a halide solid electrolyte according to the first embodiment, simple oxides and/or simple carbonates are converted into simple halides, and a solid-phase reaction of the simple halides (e.g., LiF, AlF₃, TiF₂O, etc.) is caused. According to such a method, instability such as evaporation of the raw materials is suppressed, and synthesis is performed uniformly at the microstructure level, whereby reaction non-uniformity is also reduced and precipitate phases are suppressed. As described above, the production method according to the first embodiment is a novel production method for synthesizing a halide solid electrolyte having excellent characteristics and reliability. Therefore, the production method according to the first embodiment differs from the production method described in Patent Literature 1 in many respects in terms of starting materials and reaction mechanism.

Patent Literature 2 discloses a production method for a halide solid electrolyte containing Li, Ti, M1, and F as a part of a positive electrode material. In the solid electrolyte described in Patent Literature 2, "M1" is at least one selected from the group consisting of Ca, Mg, Al, Y, and Zr. However, as in the production method described in Patent Literature 1, a fluoride is used as a starting raw material. Therefore, the production method according to the first embodiment differs from the production method described in Patent Literature 2 as well as from the production method described in Patent Literature 1 in many respects in terms of starting raw material and reaction mechanism.

As described above, in the production method according to the first embodiment, stable simple oxides and/or simple carbonates are used as starting raw materials, and these starting raw materials are halogenated to obtain simple halides, and uniform synthesis is performed using these simple halides while suppressing the generation of undesired precipitate phases. Therefore, with the production method according to the first embodiment, a halide solid electrolyte having excellent ionic conductivity can be synthesized at a low cost. Patent Literature 1 and Patent Literature 2 do not disclose the production method and the halide solid electrolyte of the first embodiment.

### [Second Embodiment]

Hereinafter, a production method for a halide solid electrolyte according to a second embodiment will be described.

The production method according to the second embodiment further includes, after the above (B) in the production method according to the first embodiment,
(C) performing pulverization treatment on the halide solid electrolyte obtained in the above (B).

In the production method according to the second embodiment, by performing the pulverization treatment in the above (C), a halide solid electrolyte having excellent ionic conductivity and reliability can be obtained with a particle size suitable for the application. In addition, at least a part of the halide solid electrolyte can be amorphized, so that ionic conductivity can be improved and the softness of the particles of the halide solid electrolyte can be improved. By improving the softness of the particles of the halide solid electrolyte, the density of a compacted powder of the halide solid electrolyte can be improved. Therefore, with the halide solid electrolyte obtained by the production method according to the second embodiment, a dense compacted powder having high ionic conductivity can be formed.

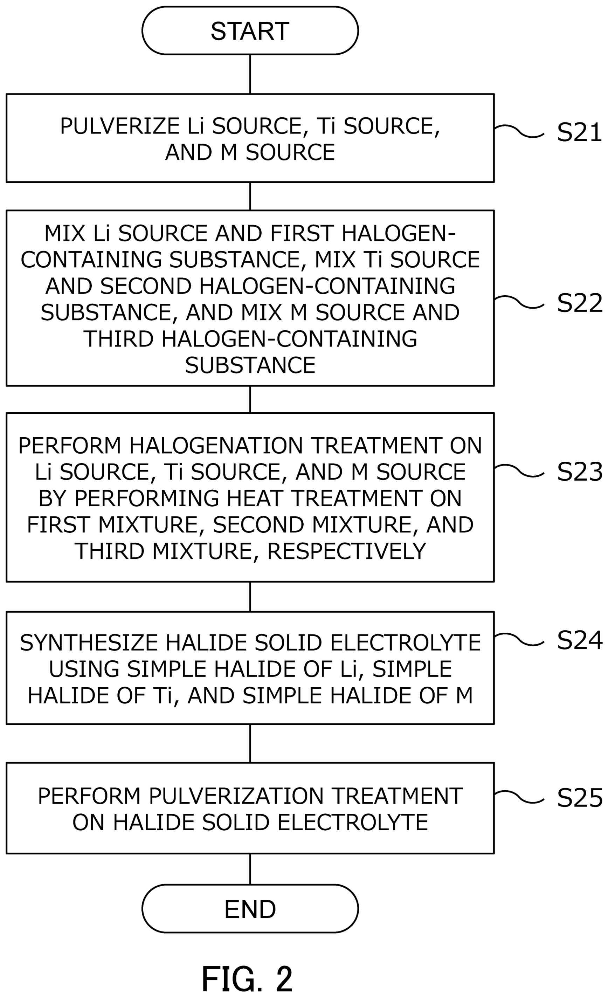

FIG. 2 is a flowchart showing an example of the production method for a halide solid electrolyte according to the second embodiment. Here, the above (A-0), the above (A-1-1), and the above (A-1-2) are performed as the above (A) and then the above (B) is performed, which is an example of the production method described in the first embodiment. In the production method according to the second embodiment, an example of a production method in which, further, the above (C) is then performed will be described.

As shown in FIG. 2, first, at least one selected from the group consisting of a Li source, a Ti source, and an M source is pulverized. In this example, for example, all of the Li source, the Ti source, and the M source are pulverized (S21). Next, the Li source and a first halogen-containing substance are mixed, the Ti source and a second halogen-containing substance are mixed, and the M source and a third halogen-containing substance are mixed (S22). Next, halogenation treatment is performed on the Li source, the Ti source, and the M source by respectively performing heat treatment on the obtained first mixture including the Li source and the first halogen-containing substance, the obtained second mixture including the Ti source and the second halogen-containing substance, and the obtained third mixture including the M source and the third halogen-containing substance (S23). Next, a halide solid electrolyte is synthesized using the obtained simple halide of Li, simple halide of Ti, and simple halide of M (S24). Next, as a step corresponding to the above (C), pulverization treatment is performed on the halide solid electrolyte obtained in S24 (S25).

S21 to S24 are the same as S11 to S14 described in the first embodiment, respectively, and thus the detailed description thereof is omitted here.

The halide solid electrolyte synthesized by the above (B) has an average particle diameter of about 3 µm or more and 20 µm or less, for example. In the above (C), the pulverization treatment is performed on such a halide solid electrolyte synthesized by the above (B) such that the average particle diameter thereof becomes about 0.1 µm or more and 3 µm or less, for example.

The pulverization treatment only has to be performed such that the halide solid electrolyte can be pulverized into small pieces having the desired particle size and may be performed by a dry method or a wet method using water or a solvent (e.g., ethanol, butyl acetate, or the like). For example, zirconia balls (e.g., balls with a diameter of 1 mm to 30 mm) and the halide solid electrolyte obtained in the above (B) are placed in a ball mill container, and the halide solid electrolyte is pulverized for 3 to 40 hours, for example. As the ball mill container, for example, a container made of polyethylene, a container lined with a fluorine resin or zirconia, etc., can be used.

The pulverization treatment in the above (B) may include, for example, mechanochemical treatment. Here, the mechanochemical treatment is performed in order to introduce distorted crystals or amorphous properties to the crystals of the halide solid electrolyte. Distorted crystals or amorphous properties are mainly introduced into the surface layers of the particles of the halide solid electrolyte. The specific means for this may be the same as in the pulverization treatment described above, and, for example, a ball mill is used. However, the pulverization conditions may be strengthened or the time may be extended. A device, a medium, etc., used for the mechanochemical treatment may be the same as in the pulverization treatment, and in general, pulverization and the mechanochemical treatment proceed at the same time. As an example, in the case of a dry method, a container lined with zirconia is used, zirconia balls with a volume ratio of 10% to 60% are placed therein, and mechanochemical milling is performed along with pulverization. The diameter of the zirconia balls is not particularly limited and balls with any size can be used. Normally, as described above, commercially available balls with a diameter of 1 mm to 30 mm are used, but balls having a smaller diameter than these balls may be used, or balls having a larger diameter than these balls may be used. The diameter of the balls to be used may be selected as desired according to a target particle size or degree of amorphization. In addition, an appropriate amount of an additive that does not adversely affect the characteristics of the halide solid electrolyte, such as ethanol, may be added in order to suppress the adhesion of the halide solid electrolyte to the zirconia balls or the inner wall of the zirconia container. The additive is preferably an additive that can be dried and removed later.

The introduction of amorphous properties into the halide solid electrolyte can be confirmed by an X-ray diffraction pattern obtained by X-ray diffraction measurement. The X-ray diffraction pattern can be measured by the θ-2θ method using Cu-Kα rays (wavelengths: 1.5405 Å and 1.5444 Å) as X-ray sources. Specifically, this introduction can be confirmed by the fact that the peak of an X-ray diffraction pattern of the halide solid electrolyte after the pulverization treatment widens compared with the peak of an X-ray diffraction pattern of the halide solid electrolyte before the pulverization treatment is performed. The fact that the peak widens means that the peak is broad and the full width at half maximum widens.

The introduction of distorted crystals into the halide solid electrolyte, that is, the presence of disturbed crystalline regions, can be observed by a transmission electron microscope (TEM) as images of highly regular regions of a lattice image and disturbed regions of the lattice image.

In addition, changes in deformability (i.e., softness) due to amorphization can be evaluated by evaluation methods such as Micro-Vickers.

As described above, the production method according to the second embodiment includes the pulverization treatment, and thus the halide solid electrolyte obtained by the production method according to the second embodiment includes, for example, an amorphous phase. Owing to this configuration, the amorphized part of the halide solid electrolyte becomes even softer and has excellent deformability. Therefore, with a compacted powder of the halide solid electrolyte, a solid electrolyte layer having higher ionic conductivity and higher stability can be formed in any shape. Therefore, with the compacted powder of the halide solid electrolyte including the amorphous phase, a solid electrolyte layer of a battery having excellent characteristics and high reliability can be realized.

The amorphous phase, for example, may be included in the surface layer of each particle of the halide solid electrolyte and may have higher ionic conductivity than the interior of the particle. Owing to this configuration, the surface layer of each particle of the halide solid electrolyte can have high ionic conductivity (e.g., 1 µS/cm or more). Therefore, the bondability between the particles and the ionic conductivity of the halide solid electrolyte are enhanced, and as a result, a solid electrolyte layer of a battery having excellent performance and high reliability can be realized.

The amorphous phase, for example, may be included in the surface layer of each particle of the halide solid electrolyte and may have lower electronic conductivity than the interior of the particle. Owing to this configuration, the surface layer of each particle of the halide solid electrolyte can have low electronic conductivity (e.g., 0.1 µS/cm or less). Therefore, the loss due to electronic conduction is reduced and the ionic conductivity is increased, and as a result, a solid electrolyte layer of a battery having excellent performance and high reliability can be realized.

As a modification of the production method according to the second embodiment, when performing the pulverization treatment in the above (C), the halide solid electrolyte may be slurried, for coating film formation, simultaneously with the pulverization treatment.

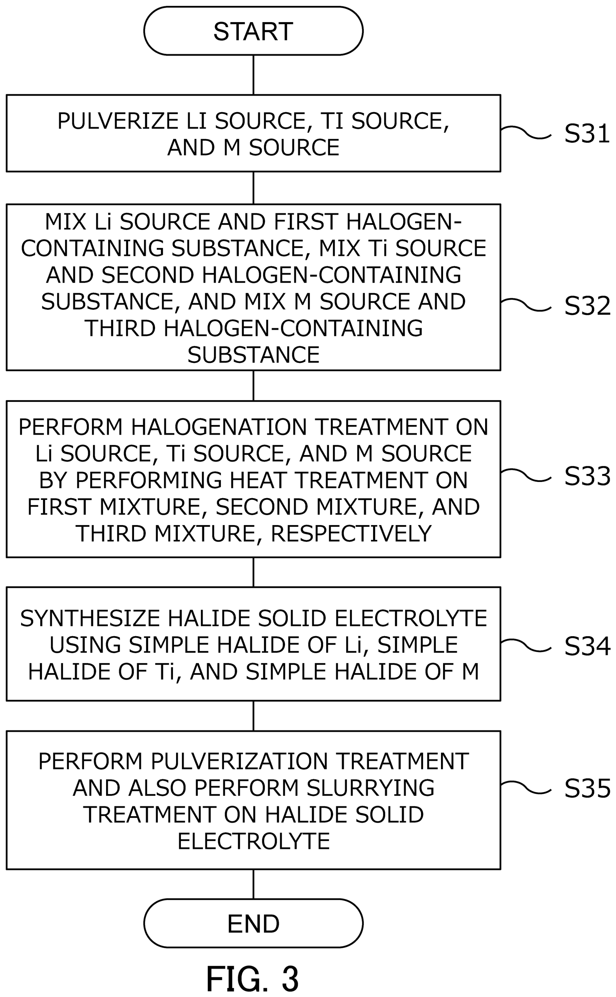

FIG. 3 is a flowchart showing a modification of the production method for a halide solid electrolyte according to the second embodiment. As for the modification of the production method according to the second embodiment as well, here, the above (A-0), the above (A-1-1), and the above (A-1-2) are performed as the above (A) and then the above (B) is performed, which is an example of the production method described in the first embodiment. In the production method according to the second embodiment, an example of a production method in which, further, the above (C) is then performed will be described.

As shown in FIG. 3, first, at least one selected from the group consisting of a Li source, a Ti source, and an M source is pulverized. In this example, for example, all of the Li source, the Ti source, and the M source are pulverized (S31). Next, the Li source and a first halogen-containing substance are mixed, the Ti source and a second halogen-containing substance are mixed, and the M source and a third halogen-containing substance are mixed (S32). Next, halogenation treatment is performed on the Li source, the Ti source, and the M source by respectively performing heat treatment on the obtained first mixture including the Li source and the first halogen-containing substance, the obtained second mixture including the Ti source and the second halogen-containing substance, and the obtained third mixture including the M source and the third halogen-containing substance (S33). Next, a halide solid electrolyte is synthesized using the obtained simple halide of Li, simple halide of Ti, and simple halide of M (S34). Next, as a step corresponding to the above (C), pulverization treatment is performed and slurrying treatment is also performed on the halide solid electrolyte obtained in S34 (S35).

S31 to S34 are the same as S11 to S14 described in the first embodiment, respectively, and thus the detailed description thereof is omitted here.

In S35, the pulverization treatment is the same as the pulverization treatment in S25 described as an example of the production method of the second embodiment. In the modification of the production method of the second embodiment, the slurrying treatment is further performed. The slurrying treatment is performed, for example, by, simultaneously with the pulverization treatment, adding an organic binder, a plasticizer, or the like to the halide solid electrolyte in a state of being dispersed and included in an organic solvent such as tetralin. An example of the organic binder is a styrene butadiene block copolymer (SBS), for example. Examples of the plasticizer include dibutyl phthalate (DBP) and butyl benzyl phthalate (BBP).

Using the obtained slurry of the halide solid electrolyte, printing or coating can be performed. The thickness of a coating film may be, for example, 10 µm or more and 100 µm or less, and thus, for example, the slurry of the pulverized halide solid electrolyte including the amorphous part can be directly applied. As described above, in the pulverization treatment, a slurry of the halide solid electrolyte may be prepared by adding the organic binder, the plasticizer, or the like, and a coating film may be formed using this slurry. Accordingly, a coating film of the halide solid electrolyte having excellent characteristics can be formed. Such a coating film can be used, for example, for the manufacture of coated-type cells.

### [Third Embodiment]

Hereinafter, a production method for a halide solid electrolyte according to a third embodiment will be described.

In the production method according to the third embodiment, halogen gas is generated by performing heat treatment on the halogen-containing substance in the above (A) described in the first embodiment, and the halogen gas is brought into contact with the Li source, the Ti source, and the M source, thereby performing halogenation treatment on the Li source, the Ti source, and the M source. In the production method according to the third embodiment, the pulverization treatment in the above (C) described in the second embodiment may be performed after the above (B).

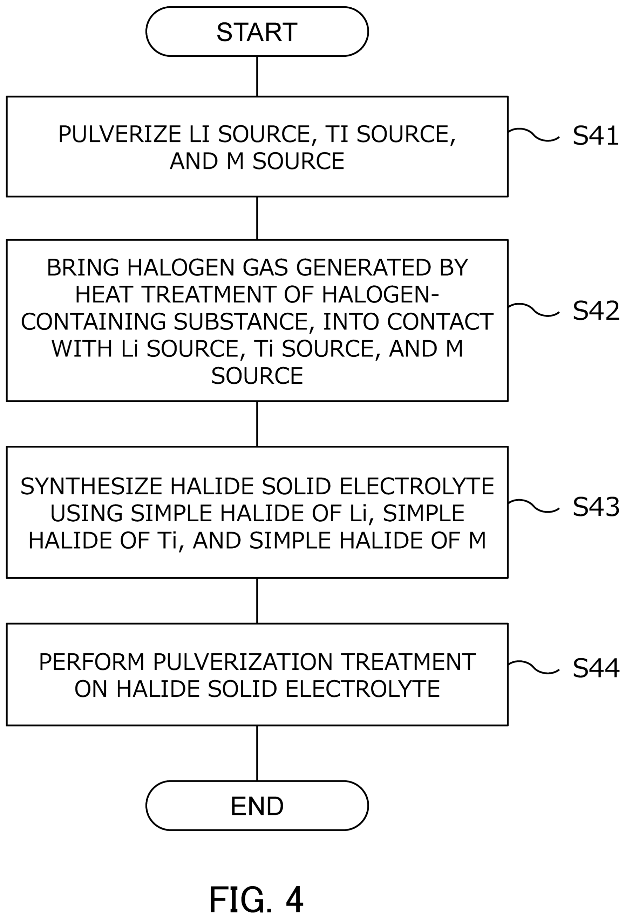

FIG. 4 is a flowchart showing an example of the production method for a halide solid electrolyte according to the third embodiment. As shown in FIG. 4, first, at least one selected from the group consisting of a Li source, a Ti source, and an M source is pulverized. In this example, for example, all of the Li source, the Ti source, and the M source are pulverized (S41). Next, the Li source, the Ti source, the M source, and a halogen-containing substance are placed at a predetermined position, heat treatment is performed on the halogen-containing substance, and generated halogen gas is brought into contact with the Li source, the Ti source, and the M source (S42). Accordingly, halogenation treatment on the Li source, the Ti source, and the M source is performed. Next, a halide solid electrolyte is synthesized using the obtained simple halide of Li, simple halide of Ti, and simple halide of M (S43). Then, as a step corresponding to the above (C), pulverization treatment may be performed on the halide solid electrolyte obtained in S43 (S44).

In the production method according to the third embodiment, the Li source, the Ti source, and the M source can be halogenated by the generated halogen gas without bringing the Li source, the Ti source, and the M source into direct contact with the halogen-containing substance. Therefore, even when a halogen-containing substance containing an inorganic component in addition to a halogen element (e.g., a substance that emits fluorine gas when heated, such as CuF₂) is used, there is no need to consider inorganic residues being incorporated into the halide solid electrolyte to be produced. Therefore, the range of halogen-containing substances that can be used can be expanded.

As a specific example, the oxide mixture is placed, for example, on a nickel mesh with fine openings, and the halogen-containing substance such as ammonium fluoride is placed under the nickel mesh. Thus, the Li source, the Ti source, and the M source and the halogen-containing substance are placed without contact with each other. In this state, by performing the heat treatment on the halogen-containing substance, halogen gas such as fluorine gas is generated, and this gas passes through the nickel mesh and comes into contact with the Li source, the Ti source, and the M source. Accordingly, the Li source, the Ti source, and the M source are converted into halides, respectively. The Li source, the Ti source, the M source, and the halogen-containing substance are as described in the first embodiment. The heat treatment can be performed in atmospheric air, but heat treatment in a nitrogen atmosphere or reducing atmosphere is preferable in order to prevent the nickel mesh from oxidizing.

### [Fourth Embodiment]

Hereinafter, a fourth embodiment will be described. The matters described in the first embodiment, the second embodiment, and the third embodiment are omitted as appropriate.

A battery according to the fourth embodiment includes a positive electrode, an electrolyte layer, and a negative electrode. The electrolyte layer is provided between the positive electrode and the negative electrode.

At least one selected from the group consisting of the positive electrode, the electrolyte layer, and the negative electrode contains a halide solid electrolyte that contains Li, Ti, Al, and F and further contains at least one selected from the group consisting of P and S. The halide solid electrolyte can be produced by the production method according to the first embodiment, the second embodiment, or the third embodiment.

Hereinafter, a halide solid electrolyte included in the battery according to the fourth embodiment, containing Li, Ti, Al, and F, and further containing at least one selected from the group consisting of P and S, is described as a halide solid electrolyte according to the fourth embodiment.

The halide solid electrolyte according to the fourth embodiment may consist substantially of Li, Ti, Al, F, P, and S or may consist only of Li, Ti, Al, F, P, and S as described as an example of the halide solid electrolyte that can be produced by the production method according to the first embodiment, the second embodiment, or the third embodiment in the first embodiment, the second embodiment, or the third embodiment. In addition, the halide solid electrolyte according to the fourth embodiment may include a first crystal phase represented by the above composition formula (4) and a second crystal phase represented by the above composition formula (5), as described in the first embodiment. In this case, for example, P and S may be taken into both the first crystal phase (i.e., Li₂TiX₆) and the second crystal phase (i.e., Li₃AlX₆). In addition, the halide solid electrolyte according to the fourth embodiment may include an amorphous phase as described in the second embodiment. The amorphous phase, for example, may be included in the surface layer of each particle of the halide solid electrolyte according to the fourth embodiment and may have higher ionic conductivity than the interior of the particle. In addition, the amorphous phase, for example, may be included in the surface layer of each particle of the halide solid electrolyte according to the fourth embodiment and may have lower electronic conductivity than the interior of the particle.

Owing to including the halide solid electrolyte according to the fourth embodiment, the battery according to the fourth embodiment has excellent charge and discharge characteristics.

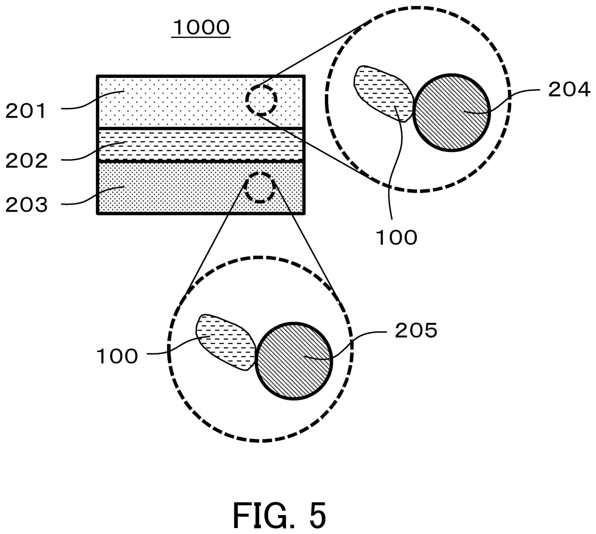

FIG. 5 illustrates a cross-sectional view of a battery 1000 according to the fourth embodiment.

The battery 1000 according to the fourth embodiment includes a positive electrode 201, an electrolyte layer 202, and a negative electrode 203. The electrolyte layer 202 is provided between the positive electrode 201 and the negative electrode 203.

The positive electrode 201 may include a positive electrode material including the halide solid electrolyte according to the fourth embodiment. The positive electrode 201 includes a positive electrode active material 204 and a solid electrolyte 100.

The electrolyte layer 202 includes an electrolyte material.

The negative electrode 203 includes a negative electrode active material 205 and the solid electrolyte 100.

The solid electrolyte 100 includes, for example, the halide solid electrolyte according to the fourth embodiment. The solid electrolyte 100 may be particles including the halide solid electrolyte according to the fourth embodiment as a main component. The particles including the halide solid electrolyte according to the fourth embodiment as a main component mean particles in which the component included in the largest amount in molar ratio is the halide solid electrolyte according to the fourth embodiment. The solid electrolyte 100 may be particles consisting of the halide solid electrolyte according to the fourth embodiment.

The positive electrode 201 includes a material capable of occluding and releasing metal ions (e.g., lithium ions). The material is, for example, the positive electrode active material 204.

Examples of the positive electrode active material 204 include a lithium-containing transition metal oxide, a transition metal fluoride, polyanion, a fluorinated polyanion material, a transition metal sulfide, a transition metal oxyfluoride, a transition metal oxysulfide, and a transition metal oxynitride. Examples of the lithium-containing transition metal oxide include Li(Ni, Co, Mn)O₂, Li(Ni, Co, Al)O₂, and LiCoO₂.

In the present disclosure, "(A, B, C)" means "at least one selected from the group consisting of A, B, and C".

The shape of the positive electrode active material 204 is not limited to a specific shape. The positive electrode active material 204 may be particles. The positive electrode active material 204 may have a median diameter of 0.1 µm or more and 100 µm or less. In the case where the positive electrode active material 204 has a median diameter of 0.1 µm or more, the positive electrode active material 204 and the solid electrolyte 100 can be well dispersed in the positive electrode 201. Accordingly, the charge and discharge characteristics of the battery 1000 are improved. In the case where the positive electrode active material 204 has a median diameter of 100 µm or less, the diffusion rate of lithium in the positive electrode active material 204 improves. Accordingly, the battery 1000 can operate at a high power.

The positive electrode active material 204 may have a median diameter larger than that of the solid electrolyte 100. Accordingly, the positive electrode active material 204 and the solid electrolyte 100 can be well dispersed in the positive electrode 201.

In order to improve the energy density and power output of the battery 1000, the ratio of the volume of the positive electrode active material 204 to the total of the volume of the positive electrode active material 204 and the volume of the solid electrolyte 100 in the positive electrode 201 may be 0.30 or more and 0.95 or less.

A coating layer may be formed on at least a part of the surface of the positive electrode active material 204. The coating layer can be formed on the surface of the positive electrode active material 204, for example, before mixing a conductive additive and a binder. Examples of a coating material included in the coating layer include a sulfide solid electrolyte, an oxide solid electrolyte, and a halide solid electrolyte. In the case where the solid electrolyte 100 includes a sulfide solid electrolyte, the coating material may include the halide solid electrolyte according to the fourth embodiment to suppress oxidative decomposition of the sulfide solid electrolyte. In the case where the solid electrolyte 100 includes the halide solid electrolyte according to the fourth embodiment, the coating material may include an oxide solid electrolyte to suppress oxidative decomposition of the solid electrolyte. As the oxide solid electrolyte, lithium niobate having excellent high-potential stability may be used. By suppressing oxidative decomposition, an increase in overvoltage of the battery 1000 can be suppressed.

As described above, in the case where the positive electrode 201 includes a positive electrode material including the halide according to the fourth embodiment, the positive electrode material may include the halide solid electrolyte according to the fourth embodiment as the solid electrolyte 100 or may include a coating material that coats the positive electrode active material 204.

In order to improve the energy density and power output of the battery 1000, the positive electrode 201 may have a thickness of 10 µm or more and 500 µm or less.

The electrolyte layer 202 includes an electrolyte material. The electrolyte material is, for example, a solid electrolyte. The solid electrolyte may include the halide solid electrolyte according to the fourth embodiment. The electrolyte layer 202 may be a solid electrolyte layer.

The electrolyte layer 202 may include 50 mass% or more of the halide solid electrolyte according to the fourth embodiment. The electrolyte layer 202 may include 70 mass% or more of the halide solid electrolyte according to the fourth embodiment. The electrolyte layer 202 may include 90 mass% or more of the halide solid electrolyte according to the fourth embodiment. The electrolyte layer 202 may consist only of the halide solid electrolyte according to the fourth embodiment.

Hereinafter, the halide solid electrolyte according to the fourth embodiment is referred to as first solid electrolyte. A solid electrolyte different from the first solid electrolyte is referred to as second solid electrolyte.

The electrolyte layer 202 may include not only the first solid electrolyte but also the second solid electrolyte. In the electrolyte layer 202, the first solid electrolyte and the second solid electrolyte may be uniformly dispersed. A layer consisting of the first solid electrolyte and a layer consisting of the second solid electrolyte may be stacked together along the stacking direction of the battery 1000.

The battery according to the fourth embodiment may include the positive electrode 201, a second electrolyte layer, a first electrolyte layer, and the negative electrode 203 in this order. Here, the solid electrolyte included in the first electrolyte layer may have a lower reduction potential than the solid electrolyte included in the second electrolyte layer. Accordingly, the solid electrolyte included in the second electrolyte layer can be used without being reduced. As a result, the charge and discharge efficiency of the battery 1000 can be improved. For example, in the case where the second electrolyte layer includes the first solid electrolyte, the first electrolyte layer may include a sulfide solid electrolyte to suppress reductive decomposition of the solid electrolyte. Accordingly, the charge and discharge efficiency of the battery 1000 can be improved. The second electrolyte layer may include the first solid electrolyte. The first solid electrolyte has high oxidation resistance, so that a battery having excellent charge and discharge characteristics can be realized.

The electrolyte layer 202 may consist only of the second solid electrolyte.

The electrolyte layer 202 may have a thickness of 1 µm or more and 1000 µm or less. In the case where the electrolyte layer 202 has a thickness of 1 µm or more, the positive electrode 201 and the negative electrode 203 are less likely to short circuit. In the case where the electrolyte layer 202 has a thickness of 1000 µm or less, the battery 1000 can operate at a high power.

Examples of the second solid electrolyte include Li₂MgX₄, Li₂FeX₄, Li(Al, Ga, In)X₄, Li₃(Al, Ga, In)X₆, and Lil, where X is at least one selected from the group consisting of F, Cl, Br, and I.

In order to improve the energy density and power output of the battery 1000, the electrolyte layer 202 may have a thickness of 1 µm or more and 1000 µm or less.

The negative electrode 203 includes a material capable of occluding and releasing metal ions (e.g., lithium ions). The material is, for example, the negative electrode active material 205.

Examples of the negative electrode active material 205 include a metal material, a carbon material, an oxide, a nitride, a tin compound, and a silicon compound. The metal material may be an elemental metal or an alloy. Examples of the metal material include lithium metal and a lithium alloy. Examples of the carbon material include a natural graphite, a coke, a semi-graphitized carbon, a carbon fiber, a spherical carbon, an artificial graphite, and an amorphous carbon. From the viewpoint of capacity density, preferred examples of the negative electrode active material include silicon (i.e., Si), tin (i.e., Sn), a silicon compound, and a tin compound.

The negative electrode active material 205 may be selected in consideration of the reduction resistance of the solid electrolyte material included in the negative electrode 203. For example, in the case where the negative electrode 203 includes the first solid electrolyte, the negative electrode active material 205 may be a material capable of occluding and releasing lithium ions at 0.27 V or more with respect to lithium. Examples of such a negative electrode active material include a titanium oxide, indium metal, and a lithium alloy. Examples of the titanium oxide include Li₄Ti₅O₁₂, LiTi₂O₄, and TiO₂. By using the above negative electrode active material, reductive decomposition of the first solid electrolyte included in the negative electrode 203 can be suppressed. As a result, the charge and discharge efficiency of the battery 1000 can be improved.

The shape of the negative electrode active material 205 is not limited to a specific shape. The negative electrode active material 205 may be particles. The negative electrode active material 205 may have a median diameter of 0.1 µm or more and 100 µm or less. In the case where the negative electrode active material 205 has a median diameter of 0.1 µm or more, the negative electrode active material 205 and the solid electrolyte 100 can be well dispersed in the negative electrode 203. Accordingly, the charge and discharge characteristics of the battery 1000 are improved. In the case where the negative electrode active material 205 has a median diameter of 100 µm or less, the diffusion rate of lithium in the negative electrode active material 205 improves. Accordingly, the battery 1000 can operate at a high power.

The negative electrode active material 205 may have a median diameter larger than that of the solid electrolyte 100. Accordingly, the negative electrode active material 205 and the solid electrolyte 100 can be well dispersed in the negative electrode 203.

In order to improve the energy density and power output of the battery 1000, the ratio of the volume of the negative electrode active material 205 to the total of the volume of the negative electrode active material 205 and the volume of the solid electrolyte 100 in the negative electrode 203 may be 0.30 or more and 0.95 or less.

In order to improve the energy density and power output of the battery 1000, the negative electrode 203 may have a thickness of 10 µm or more and 500 µm or less.

At least one selected from the group consisting of the positive electrode 201, the electrolyte layer 202, and the negative electrode 203 may include the second solid electrolyte for the purpose of increasing ionic conductivity, chemical stability, and electrochemical stability.

The second solid electrolyte may be a sulfide solid electrolyte.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

In the case where the electrolyte layer 202 includes the first solid electrolyte, the negative electrode 203 may include a sulfide solid electrolyte to suppress reductive decomposition of the solid electrolyte. By covering the negative electrode active material with the sulfide solid electrolyte which is electrochemically stable, contact of the first solid electrolyte with the negative electrode active material can be suppressed. As a result, the internal resistance of the battery 1000 can be reduced.

The second solid electrolyte may be an oxide solid electrolyte.

Examples of the oxide solid electrolyte include:
(i) a NASICON solid electrolyte such as LiTi₂(PO₄)₃ and element-substituted substances thereof;
(ii) a perovskite solid electrolyte such as (LaLi)TiO₃;
(iii) a LISICON solid electrolyte such as Li₁₄ZnGe₄O₁₆, Li₄SiO₄, and LiGeO₄ and element-substituted substances thereof;
(iv) a garnet solid electrolyte such as Li₇La₃Zr₂O₁₂ and element-substituted substances thereof; and
(v) Li₃PO₄ and N-substituted substances thereof.

As described above, the second solid electrolyte may be a halide solid electrolyte.

Examples of the halide solid electrolyte include Li₂MgX₄, Li₂FeX₄, Li(Al, Ga, In)X₄, Li₃(Al, Ga, In)X₆, and Lil, where X is at least one selected from the group consisting of F, Cl, Br, and I.

Another example of the halide solid electrolyte is a compound represented by LiₐMe_{b}Y_{c}Z₆, where a + mb + 3c = 6 and c > 0 are satisfied. Me is at least one selected from the group consisting of metal elements other than Li and Y and metalloid elements. Z is at least one selected from the group consisting of F, Cl, Br, and I. The symbol m represents the valence of Me. The "metalloid elements" are B, Si, Ge, As, Sb, and Te. The "metal elements" are: all the elements included in Groups 1 to 12 of the periodic table (excluding hydrogen); and all the elements included in Groups 13 to 16 of the periodic table (excluding B, Si, Ge, As, Sb, Te, C, N, P, O, S, and Se).

In order to improve the ionic conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb.

The halide solid electrolyte may be Li₃YCl₆ or Li₃YBr₆.

The second solid electrolyte may be an organic polymer solid electrolyte.

An example of the organic polymer solid electrolyte is a compound of a polymer compound with a lithium salt.

The polymer compound may have an ethylene oxide structure. A polymer compound having an ethylene oxide structure can contain a large amount of a lithium salt, and accordingly can further increase the ionic conductivity.

Examples of the lithium salt include LiPF₆, LiBF₄, LiSbF₆, LiAsF₆, LiSO₃F₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

In order to facilitate transfer of lithium ions and thereby improve the output characteristics of the battery, at least one selected from the group consisting of the positive electrode 201, the electrolyte layer 202, and the negative electrode 203 may include a nonaqueous electrolyte solution, a gel electrolyte, or an ionic liquid.

The nonaqueous electrolyte solution contains a nonaqueous solvent and a lithium salt dissolved in the nonaqueous solvent.

Examples of the nonaqueous solvent include a cyclic carbonate solvent, a linear carbonate solvent, a cyclic ether solvent, a linear ether solvent, a cyclic ester solvent, a linear ester solvent, and a fluorinated solvent. Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a combination of two or more nonaqueous solvents selected from these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt falls, for example, within a range from 0.5 mol/L to 2 mol/L.

As the gel electrolyte, a polymer material impregnated with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Examples of cations contained in the ionic liquid include:
(i) aliphatic linear quaternary salts such as tetraalkylammoniums and tetraalkylphosphoniums;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

In order to improve the adhesion between particles, at least one selected from the group consisting of the positive electrode 201, the electrolyte layer 202, and the negative electrode 203 may contain a binder.

Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. A copolymer can also be used as the binder. Examples of such a binder include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more materials selected from these may be used as the binder.

At least one of the positive electrode 201 and the negative electrode 203 may contain a conductive additive in order to improve electronic conductivity.

Examples of the conductive additive include:
(i) graphites such as a natural graphite and an artificial graphite;
(ii) carbon blacks such as acetylene black and ketjen black;
(iii) conductive fibers such as a carbon fiber and metal fiber;
(iv) fluorinated carbon;
(v) metal powders such as an aluminum powder;
(vi) conductive whiskers such as a zinc oxide whisker and a potassium titanate whisker;
(vii) a conductive metal oxide such as titanium oxide; and
(viii) a conductive polymer compound such as polyaniline compound, polypyrrole compound, and polythiophene compound. To reduce the cost, the conductive additive in (i) or (ii) above may be used.

Instead of the electrolyte layer, a separator impregnated with an electrolyte solution may be used, or a casing in which a positive electrode, a separator portion, and a negative electrode are housed may be filled with an electrolyte solution. The electrolyte solution may be, for example, the nonaqueous electrolyte solution described above. Examples of the shape of the battery according to the fourth embodiment include a coin type, a cylindrical type, a prismatic type, a sheet type, a button type, a flat type, and a stack type.

The battery according to the fourth embodiment may be manufactured, for example, by preparing a material for forming a positive electrode, a material for forming an electrolyte layer, and a material for forming a negative electrode, and producing by a known method a stack in which the positive electrode, the electrolyte layer, and the negative electrode are disposed in this order.

### [Other Embodiments]

### (Additional Notes)

The following techniques are disclosed by the description of the above embodiments.

### (Technique 1)

A production method for a halide solid electrolyte containing Li, Ti, M, and X, wherein
the M is at least one element selected from the group consisting of metal elements (excluding Li and Ti) and metalloid elements and metal elements,
the X is at least one selected from the group consisting of F, Cl, Br, and I, and
the production method includes:
   (A) performing halogenation treatment on at least one Li source selected from the group consisting of a simple oxide and a simple carbonate of Li, at least one Ti source selected from the group consisting of a simple oxide and a simple carbonate of Ti, and at least one M source selected from the group consisting of a simple oxide and a simple carbonate of M, to obtain a simple halide of Li, a simple halide of Ti, and a simple halide of M, respectively; and
   (B) synthesizing the halide solid electrolyte using the simple halide of Li, the simple halide of Ti, and the simple halide of M.

In the production method of Technique 1, relatively inexpensive materials having excellent atmospheric stability such as simple oxides and simple carbonates are used as raw materials serving as the Li source, the Ti source, and the M source. Therefore, with the production method of Technique 1, a halide solid electrolyte having excellent ionic conductivity comparable to that of a halide solid electrolyte produced by a conventional production method can be synthesized stably at a low cost. Moreover, the simple oxides and the simple carbonates used as the Li source, the Ti source, and the M source are generally materials harder than halides. Therefore, in the production method of Technique 1, unlike the case where a halide is used as a raw material, the raw materials can be easily pulverized and micronized. Therefore, if the raw materials are micronized and then halogenation treatment and synthesis of a solid electrolyte are performed, a fine halide solid electrolyte can be easily produced. As described above, the production method of Technique 1 uses raw materials that are easy to handle in micronizing such as pulverizing and is therefore also suitable for producing a fine halide solid electrolyte.

### (Technique 2)

The production method for the halide solid electrolyte according to Technique 1, wherein the (A) includes:
(A-0) pulverizing at least one selected from the group consisting of the Li source, the Ti source, and the M source; and
(A-1) performing halogenation treatment on the Li source, the Ti source, and the M source after the (A-0), to obtain the simple halide of Li, the simple halide of Ti, and the simple halide of M, respectively.

With the production method of Technique 2, a fine halide solid electrolyte can be produced more easily at a lower cost than with a conventional production method using relatively soft halides as raw materials.

### (Technique 3)

The production method for the halide solid electrolyte according to Technique 1 or 2, wherein
the halide solid electrolyte includes a first crystal phase represented by the following composition formula (1) and a second crystal phase represented by the following composition formula (2),

composition formula (1): Li₂TiX₆,

and

composition formula (2): Li₃MX₆.

With the production method of Technique 3, a halide solid electrolyte having excellent ionic conductivity can be synthesized. A halide solid electrolyte having controlled characteristics such as density, strength, and electrical characteristics can be produced by changing the ratio of the composition formula (1) to the composition formula (2).

### (Technique 4)

The production method for the halide solid electrolyte according to any one of Techniques 1 to 3, wherein
the M includes Al.

With the production method of Technique 4, a halide solid electrolyte having high ionic conductivity can be obtained.

### (Technique 5)

The production method for the halide solid electrolyte according to any one of Techniques 1 to 4, wherein
the X includes F.

With the production method of Technique 5, a halide solid electrolyte having excellent stability (in particular, excellent electrochemical stability and heat resistance) and having high ionic conductivity can be obtained.

### (Technique 6)

The production method for the halide solid electrolyte according to any one of Techniques 1 to 5, wherein
the Li source, the Ti source, and the M source are in particle form.

**In** the production method of Technique 6, halogenation (i.e., substitution of halogen and oxygen elements) proceeds from the particle surface, and the reaction area increases as the paths of these reactions shorten. Therefore, it becomes easier for the halogenation of the raw materials and the solid-phase reaction (synthesis reaction in a step corresponding to the above (B)) to proceed. Therefore, intermediate products that are produced when the reaction is insufficient, and reaction residues such as carbonates can be reduced, so that a homogeneous halide solid electrolyte having excellent characteristics can be obtained. Moreover, the reactivity of halogenation and the like is good, so that the solid electrolyte can be synthesized in a short time at a low temperature, and the productivity is also excellent.

### (Technique 7)

The production method for the halide solid electrolyte according to any one of Techniques 1 to 6, wherein
in the (A), the halogenation treatment on the Li source, the Ti source, and the M source is performed by performing heat treatment on a halogen-containing substance having thermal decomposition properties.

**In** the production method of Technique 7, the halogenation treatment is performed by performing heat treatment on the halogen-containing substance having thermal decomposition properties, and thus the simple oxides or simple carbonates used as the Li source, the Ti source, and the M source can be converted into halides with good productivity through control of the heat treatment conditions. The control of the heat treatment conditions means, for example, control of the temperature or selection of a heat treatment atmosphere. The heat treatment atmosphere is, for example, air, nitrogen, or a reducing gas. In addition, the temperature or progress of halogenation can also be controlled by using a plurality of halogen-containing substances having thermal decomposition properties (e.g., thermal decomposition temperature, time required for thermal decomposition, etc.) different from each other, or by adjusting the particle diameter of the halogen-containing substance. Therefore, various oxides and carbonates can be stably and uniformly halogenated.

### (Technique 8)

The production method for the halide solid electrolyte according to Technique 7, wherein the halogen-containing substance is in particle form.

**In** the production method of Technique 8, the thermal decomposition properties of the halogen-containing substance are improved, and the contact areas between the Li source, the Ti source, and the M source, which are the starting raw materials, and the halogen-containing substance are increased. Therefore, the halogenation of the Li source, the Ti source, and the M source can be efficiently performed. **In** addition, the halogenation reaction can be controlled by the particle shape of the halogen-containing substance. For example, the temperature and rate of the halogenation of the Li source, the Ti source, and the M source can be increased, for example, by making the particles of the halogen-containing substance smaller. Furthermore, by mixing the Li source, the Ti source, and the M source with the particulate halogen-containing substance, uniform halogenation of the Li source, the Ti source, and the M source is enabled. In addition, precise control of the halogen amount is enabled. Thus, the synthesis of the desired halide solid electrolyte is enabled. Moreover, the halogen-containing substance can be used in an amount required for the halogenation of the Li source, the Ti source, and the M source, so that excess halogen gas emission can be suppressed. Therefore, the environmental impact is reduced and the influence on corrosion of a furnace material, etc., is also reduced.

### (Technique 9)

The production method for the halide solid electrolyte according to Technique 7 or 8, wherein
the (A) includes:
(A-1-1) mixing the Li source and a first halogen-containing substance, mixing the Ti source and a second halogen-containing substance, and mixing the M source and a third halogen-containing substance; and
(A-1-2) performing halogenation treatment on the Li source, the Ti source, and the M source by respectively performing heat treatment on a first mixture including the Li source and the first halogen-containing substance, a second mixture including the Ti source and the second halogen-containing substance, and a third mixture including the M source and the third halogen-containing substance, which are obtained in the (A-1-1).

**In** the production method of Technique 9, the heat treatment for the halogenation treatment can be performed on a homogeneous mixture obtained by mixing the starting raw materials and the halogen-containing substance. **In** addition, the contact areas between the starting raw materials and the halogen-containing substance can be increased. Therefore, in the production method of Technique 9, the halogenation of the starting raw materials can be promoted uniformly and evenly throughout the Li source, the Ti source, and the M source, respectively. Therefore, a homogeneous halide solid electrolyte having excellent characteristics can be obtained.

### (Technique 10)

The production method for the halide solid electrolyte according to Technique 7 or 8, wherein
in the (A), a halogen gas is generated by performing heat treatment on a halogen-containing substance, and the halogen gas is brought into contact with the Li source, the Ti source, and the M source, thereby performing the halogenation treatment on the Li source, the Ti source, and the M source.

**In** the production method of Technique 10, the Li source, the Ti source, and the M source can be halogenated by the generated halogen gas without bringing the Li source, the Ti source, and the M source into direct contact with the halogen-containing substance. Therefore, even when a halogen-containing substance containing an inorganic component in addition to a halogen element is used, there is no need to consider inorganic residues being incorporated into the halide solid electrolyte to be produced. Therefore, the range of halogen-containing substances that can be used can be expanded.

### (Technique 11)

The production method for the halide solid electrolyte according to any one of Techniques 8 to 11, wherein
the halogen-containing substance includes an ammonium salt.

The thermal decomposition of the ammonium salt starts at a relatively low temperature (e.g., about 150°C). Therefore, the ammonium salt is less likely to remain as an unnecessary inorganic component in the finally obtained halide solid electrolyte and can halogenate the Li source, the Ti source, and the M source at a low temperature. The halogenation at a low temperature is, for example, conversion of the Li source, the Ti source, and the M source into halides in the range of about 150°C or higher and 600°C or lower. In the case where a halide raw material is used, for example, a temperature higher than 600°C (e.g., higher than 600°C and equal to or lower than 900°C) is required to synthesize the halide solid electrolyte. Therefore, with the production method of Technique 11, the halide solid electrolyte can be synthesized without causing sintering to proceed excessively. Therefore, a halide solid electrolyte having excellent pulverizability can be synthesized. Since the halide solid electrolyte having excellent pulverizability can be synthesized as described above, the production method of Technique 11 is also suitable for producing a fine halide solid electrolyte. Furthermore, with the production method of Technique 11, the energy for synthesis is saved, and the heating and cooling times are reduced, so that the productivity is also improved. Moreover, since the synthesis is performed at a low temperature, the durability of the furnace material is improved, and the running cost and replacement frequency of a synthetic member are also significantly reduced.

### (Technique 12)

The production method for the halide solid electrolyte according to Technique 11, wherein the ammonium salt includes NH₄F.

NH₄F is a highly decomposable fluorine source and can act effectively on the fluorination of the Li source, the Ti source, and the M source. Therefore, with the production method of Technique 12, NH₄F can convert the Li source, the Ti source, and the M source into fluorides without leaving any inorganic substances while being thermally decomposed at a low temperature (e.g., about 150°C) and a high decomposition rate.

### (Technique 13)

The production method for the halide solid electrolyte according to any one of Techniques 7 to 12, wherein
the halogen-containing substance includes a resin.

With the production method of Technique 13, the halogen-containing substance can halogenate the Li source, the Ti source, and the M source without leaving any inorganic substances while being thermally decomposed at a relatively high temperature (e.g., about 450°C or higher and 600°C or lower). Therefore, the production method of Technique 14 is suitable for the case where it is desired to carry out the halogenation of the Li source, the Ti source, and the M source at a relatively high temperature (e.g., about 450°C or higher and 600°C or lower).

### (Technique 14)

The production method for the halide solid electrolyte according to Technique 13, wherein the resin includes a fluorine resin.

The fluorine resin such as PTFE can halogenate the Li source, the Ti source, and the M source while being thermally decomposed at a relatively high temperature (e.g., about 450°C or higher and 600°C or lower). Therefore, the production method of Technique 14 is suitable for the case where it is desired to carry out the halogenation at a relatively high temperature (e.g., about 450°C or higher and 600°C or lower).

### (Technique 15)

The production method for the halide solid electrolyte according to any one of Techniques 7 to 14, wherein
the halogen-containing substance includes a substance from which inorganic components generated by thermal decomposition during the heat treatment in the (A), other than halogen elements, are substantially not incorporated into the halide solid electrolyte.

For the halogen-containing substance, it is required that while the halogen elements generated by thermal decomposition during the heat treatment in the above (A) are replacing the oxygen elements of the Li source, the Ti source, and the M source, the other components are not incorporated as inorganic residues into the finally obtained halide solid electrolyte. By using, as the halogen-containing substance, a substance from which the inorganic components generated by thermal decomposition during the heat treatment, other than halogen elements, are substantially not incorporated into the finally obtained halide solid electrolyte, the incorporation of inorganic residues into the halide solid electrolyte can be suppressed, and the desired halide solid electrolyte can be obtained. Examples of the halogen-containing substance from which the inorganic components generated by thermal decomposition during the heat treatment, other than halogen elements, are substantially not incorporated into the finally obtained halide solid electrolyte, include substances from which inorganic components generated by thermal decomposition during heat treatment, other than halogen elements, are converted into gas and discharged.

### (Technique 16)

The production method for the halide solid electrolyte according to any one of Techniques 7 to 15, wherein
the halogen-containing substance includes a plurality of types of halogen-containing compounds.

**In** the production method of Technique 16, for example, both the ammonium salt and the fluorine resin can be used as the halogen-containing substance. Accordingly, the temperature range where the halogen-containing substance acts as a halogen source can be controlled to be wide. Thus, the temperature at which the Li source, the Ti source, and the M source are converted into the halides can be controlled over a wide range. Therefore, with the production method of Technique 16, it becomes easy to obtain the desired halide solid electrolyte.

### (Technique 17)

The production method for the halide solid electrolyte according to any one of Techniques 1 to 16, wherein
in the (A), the halogenation treatment on the Li source, the Ti source, and the M source is performed at a temperature of 150°C or higher.

**In** the production method of Technique 17, by the halogenation treatment at a relatively low temperature, the Li source, the Ti source, and the M source can be converted into halides before becoming hard due to sintering or becoming larger due to grain growth. Therefore, the production method of Technique 17 is suitable for producing a fine halide solid electrolyte. Furthermore, the obtained solid electrolyte is easy to pulverize, and thus contamination during pulverization can be suppressed. The temperature of the halogenation treatment is suitably, for example, 150°C or higher and 450°C or lower. Thus, a useful halide solid electrolyte that can be micronized and in which deterioration of characteristics is suppressed, can be obtained. The heat treatment for the halogenation treatment can be performed in any atmosphere suitable for conversion to various halides, such as air, nitrogen, and a reducing atmosphere.

### (Technique 18)

A halide solid electrolyte containing:
Li;
Ti;
Al;
F; and
at least one selected from the group consisting of P and S.

Owing to this configuration, a homogeneous halide solid electrolyte having excellent ionic conductivity is obtained.

### (Technique 19)

The halide solid electrolyte according to Technique 18, wherein
the halide solid electrolyte is in particle form, and
each particle of the halide solid electrolyte includes a first crystal phase represented by the following composition formula (4) and a second crystal phase represented by the following composition formula (5),

   composition formula (4): Li₂TiX₆,

   and

   composition formula (5): Li₃AlX₆.

According to this configuration, the first crystal phase of Li₂TiX₆ and the second crystal phase of Li₃MX₆ are integrally included in one particle. Therefore, a halide solid electrolyte in which the first crystal phase and the second crystal phase are homogenized is realized. Accordingly, the first crystal phase and the second crystal phase can be uniformly dispersed when a compacted powder is formed using the halide solid electrolyte or the halide solid electrolyte is dispersed for preparing a slurry, so that a solid electrolyte layer having high ionic conductivity and excellent stability can be produced. The particle size and shape can be selected according to the application. Such composite particles including two crystal phases in one particle are formed by bonding together during the solid-phase reaction, for example. Therefore, it is also possible to make the composite particles finer by a method of micronizing the oxide raw materials.

### (Technique 20)

The halide solid electrolyte according to Technique 18 or 19, wherein
the halide solid electrolyte includes an amorphous phase.

Owing to this configuration, the amorphized part of the halide solid electrolyte becomes even softer and has excellent deformability. Therefore, with a compacted powder of the halide solid electrolyte, a solid electrolyte layer having higher ionic conductivity and higher reliability can be formed in any shape. Therefore, with the compacted powder of the halide solid electrolyte of Technique 20, a solid electrolyte layer of a battery having excellent characteristics and high reliability can be realized.

### (Technique 21)

The halide solid electrolyte according to Technique 20, wherein
the amorphous phase is included in a surface layer of each particle of the halide solid electrolyte and has higher ionic conductivity than an interior of the particle.

Owing to this configuration, the surface layer of each particle of the halide solid electrolyte has high ionic conductivity (e.g., 1 µS/cm or more). Therefore, the bondability between the particles and the ionic conductivity of the halide solid electrolyte are enhanced, and as a result, a solid electrolyte layer of a battery having excellent performance and high reliability can be realized.

### (Technique 22)

The halide solid electrolyte according to Technique 20 or 21, wherein
the amorphous phase is included in a surface layer of each particle of the halide solid electrolyte and has lower electronic conductivity than an interior of the particle.

Owing to this configuration, the surface layer of each particle of the halide solid electrolyte has low electronic conductivity (e.g., 0.1 µS/cm or less). Therefore, the loss due to electronic conduction is reduced and the ionic conductivity is increased, and as a result, a solid electrolyte layer of a battery having excellent performance and high reliability can be realized.

### (Technique 23)

The halide solid electrolyte according to any one of Techniques 18 to 22, wherein
at least one selected from the group consisting of the following (1), (2), and (3) is satisfied in an X-ray diffraction pattern obtained by X-ray diffraction measurement of the halide solid electrolyte using Cu-Kα rays,
(1) there is no peak derived from TiF₄,
(2) there is no peak derived from LiF, and
(3) there is no peak derived from AlF₃.

Owing to this configuration, a halide solid electrolyte having excellent characteristics and reliability can be obtained.

### (Technique 24)

A positive electrode material including the halide solid electrolyte according to any one of Techniques 18 to 23.

With the positive electrode material according to Technique 24, a battery having excellent charge and discharge characteristics can be realized.

### (Technique 25)

A battery including a positive electrode including the positive electrode material according to Technique 24.

Owing to this configuration, a battery having excellent charge and discharge characteristics can be provided.

### (Technique 26)

A battery including:
a positive electrode;
a negative electrode; and
an electrolyte layer provided between the positive electrode and the negative electrode, wherein
at least one selected from the group consisting of the positive electrode, the negative electrode, and the electrolyte layer includes the halide solid electrolyte according to any one of Techniques 18 to 23.

Owing to this configuration, a battery having excellent charge and discharge characteristics can be provided.

Although the production method for a halide solid electrolyte and the halide solid electrolyte according to the present disclosure have been described above based on the embodiments, the present disclosure is not limited to these embodiments. The embodiments including various modifications conceived of by a person skilled in the art, and other embodiments configured by combining some of components of the embodiments are also included in the scope of the present disclosure as long as the embodiments do not depart from the gist of the present disclosure.

In the above-described embodiments, various changes, replacements, additions, omissions, or the like can be made within the scope of the claims or the scope equivalent thereto.

### EXAMPLES

Hereinafter, the present disclosure will be described in more detail with reference to an example.

### <Synthesis of Halide Solid Electrolyte>

### (Example 1)

Li₂CO₃ (average particle diameter: about 5 µm), Al₂O₃ (average particle diameter: about 0.6 µm), and TiO₂ (average particle diameter: about 1 µm) as starting raw materials, NH₄F (average particle diameter: about 35 µm, fluorine source powder) which is a halogen-containing substance, and P₂O₅ (average particle diameter: about 0.5 µm) and S (about 0.6 µm) as additives were prepared.

50 g of each of Li₂CO₃, Al₂O₃, and TiO₂ was placed in a 600-mL polyethylene ball mill together with 600 g of zirconia balls having a diameter of 3 mm and 200 mL of pure water and wet-pulverized for about 20 hours. The slurry of pulverized powders was then collected in a stainless steel tray and dried in atmospheric air at 200°C for 20 hours, and then pulverized powders of Li₂CO₃ (average particle diameter: about 0.6 µm), Al₂O₃ (average particle diameter: about 0.4 µm), and TiO₂ (average particle diameter: about 0.5 µm) were obtained. The average particle diameters of the respective powders were determined using a general laser diffraction particle size distribution analyzer.

Then, a mixture was prepared by uniformly mixing each of the powders of Li₂CO₃, Al₂O₃, and TiO₂ with NH₄F, which is a halogen-containing substance, in an atmospheric environment (about 24°C, humidity: 40%). Each of the powders of Li₂CO₃, Al₂O₃, and TiO₂ was mixed with a predetermined amount of NH₄F with a pestle for about 10 minutes using an alumina mortar such that the mixture was homogeneous. Accordingly, mixtures of the respective powders of Li₂CO₃, Al₂O₃, and TiO₂ and NH₄F were obtained. NH₄F powder was added in an amount required for fluorination of the raw material. Specifically, an amount of NH₄F that fluorinates all of the raw material in the reaction formula was used.

The obtained three mixtures were placed in amounts of 3 g in three high-purity (SSA-H) alumina crucibles (diameter φ: 36 mm, height: 40 mm), respectively. Next, a spacer (thickness: 0.5 mm) was placed at the outer edge of the upper surface of each crucible in order to provide a gap such that reactive gas (mainly ammonia and CO₂) to be discharged during the heat treatment was allowed to easily escape, and an alumina plate-like lid (thickness: 1 mm) was placed thereon to prevent foreign objects from falling. Next, the crucibles were placed on supports each made of mullite and having a porosity of about 20% and a small heat capacity, at a center portion of a firing furnace, and heat treatment was performed. As each support, a support having a length of 10 mm, a width of 10 mm, and a height of 10 mm was used, and three supports were placed under one crucible to float the sagger from the bottom of the furnace. The other two crucibles were also similarly installed. Thus, heater (radiation) heat and an inert gas were allowed to circulate around to the bottom of the crucible. After the door of the furnace was closed and sealed, nitrogen gas was caused to flow in at 1 L/min through an introduction port in the bottom of the furnace and was discharged through an exhaust port on the upper side of a ceiling, and the gas was continuously caused to flow until the heat treatment was completed. After the furnace was cooled, the crucibles were taken out from the furnace, and the halogenated powders were collected. When these powders were examined by XRD, it was confirmed that the powders had been converted into fluorides of LiF, AlF₃, and TiF₂O and no oxide remained therein. The temperature of the heat treatment was 300°C.

Subsequently, the powders of LiF, AlF₃, and TiF₂O were weighed such that x = 0.25 when the synthesized halide solid electrolyte was represented by the composition formula (3): xLi₂TiX₆-(1-x)Li₃MX₆. In this example, in the composition formula (3), X is F, and M is Al. In addition, as for the additives, P₂O₅ powder and S powder were weighed such that LiPF₆ was 0.1 mol% and S was 0.03 mol% with respect to [0.25Li₂TiF₆-0.75Li₃AlF₆]. The weighing of these powders was performed in an air atmosphere.

As in the halogenation treatment, about 3 g of the weighed mixed powder was placed in a high-purity alumina crucible (diameter φ: 36 mm, height: 40 mm), a spacer (thickness: 0.5 mm) was placed at the outer edge of the upper surface of the sagger, and an alumina plate-like lid was placed thereon to prevent foreign objects from falling. Next, the crucible was placed on a support made of mullite and having a porosity of about 20% and a small heat capacity, at a center portion of a firing furnace, and heat treatment was performed at 650°C for 4 hours in a nitrogen atmosphere (nitrogen flow rate: 1 L/min). After the furnace was cooled, the powder was collected. In XRD, two crystal phases, that is, a Li₃AlF₆ phase and a Li₂TiF₆ phase, were confirmed, and no other precipitate phases were detected. In addition, the powder obtained after firing was a fine powder having an average particle diameter of about 0.6 µm and a BET specific surface area of about 3.6 m²/g.

Pulverization treatment was performed on the halide solid electrolyte obtained by the above heat treatment. The pulverization treatment included mechanochemical treatment. The pulverization treatment was performed on the halide solid electrolyte (average particle diameter: about 0.6 µm) obtained by the above heat treatment such that the average particle diameter thereof was about 0.4 µm. In this example, the pulverization treatment was performed by a dry method. Zirconia balls (diameter: φ25 mm, 1.4 kg) and 3 g of the halide solid electrolyte were placed in a general ball mill (capacity: 1 L) lined with polyethylene or Teflon (registered trademark), and the halide solid electrolyte was dry-pulverized for about 20 hours. The pulverized particles had an average particle diameter of about 0.4 µm (BET specific surface area = about 5.3 m²/g).

### (Comparative Example 1)

A halide solid electrolyte was synthesized in the same manner as for the solid electrolyte material of the example described in Patent Literature 1. That is, fluorides were used as the starting raw materials, and a halide solid electrolyte of Comparative Example 1 was produced by mechanochemical synthesis. Specifically, LiF, TiF₄, and AlF₃ were prepared to have a molar ratio of LiF:TiF₄:AlF₃ = 2.75:0.25:0.75. These materials were pulverized and mixed in a mortar. The obtained mixture was subjected to a milling process with a planetary ball mill at 500 rpm for 12 hours. Thus, the halide solid electrolyte of Comparative Example 1 was synthesized.

### <Evaluation of Halide Solid Electrolyte>

The crystal phase, the ionic conductivity, the electronic conductivity, the average particle diameter, and the BET specific surface area of the halide solid electrolyte of Example 1 synthesized as described above were evaluated. The crystal phase, the ionic conductivity, the average particle diameter, and the BET specific surface area were evaluated for both halide solid electrolytes after the heat treatment and before the pulverization treatment and after the pulverization treatment. In addition, the halide solid electrolyte of Comparative Example 1 was also evaluated for crystal phase. Moreover, analysis of trace components was also performed for the halide solid electrolyte of Example 1.

### (Crystal Phase)

The crystal phase was confirmed by powder X-ray diffraction measurement both after the heat treatment and before the pulverization treatment and after the pulverization treatment. An X-ray diffractometer (MiniFlex600, manufactured by Rigaku) was used for measurement. Cu-Kα rays (wavelengths: 1.5405 Å and 1.5444 Å) were used as X-ray sources.

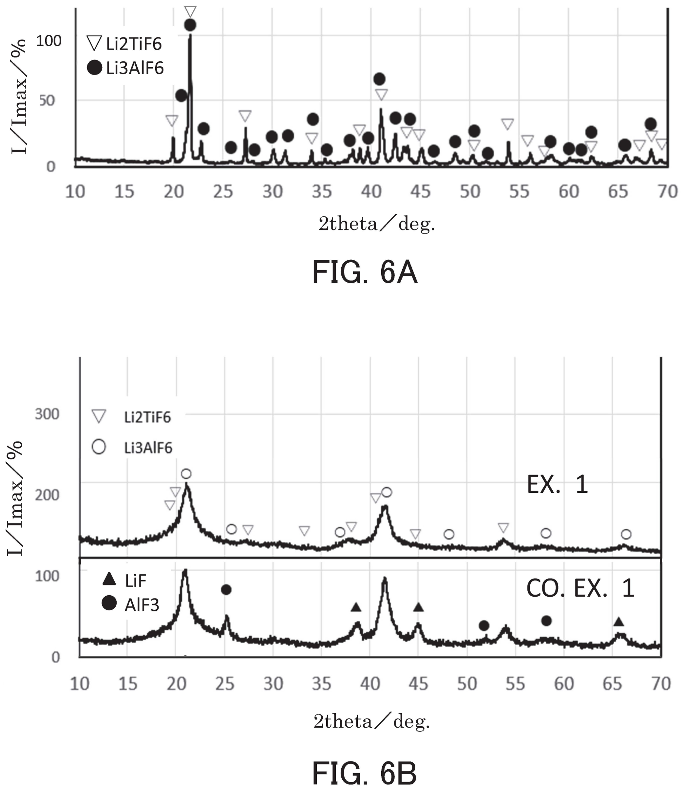

FIG. 6A is a graph showing an X-ray diffraction pattern of the halide solid electrolyte after the heat treatment and before the pulverization treatment in the production method of Example 1. FIG. 6B is a graph showing X-ray diffraction patterns of the halide solid electrolyte after the pulverization treatment obtained in Example 1 and the halide solid electrolyte obtained in Comparative Example 1. As shown in FIG. 6A, for the halide solid electrolyte synthesized in Example 1, Li₂TiF₆ corresponding to the first crystal phase and Li₃AlF₆ corresponding to the second crystal phase were confirmed. As shown in FIG. 6B, for the halide solid electrolyte after the pulverization treatment obtained in Example 1, compared with the halide solid electrolyte before the pulverization treatment, the crystallinity was reduced by the pulverization treatment, but no undesired precipitate phase was observed. On the other hand, as shown in FIG. 6B, for the halide solid electrolyte obtained in Comparative Example 1, compared with the halide solid electrolyte of Example 1, compositional variations were confirmed, and the presence of LiF and AlF₃ was also confirmed.

### (Ionic Conductivity)

For the ionic conductivity, a powder of the halide solid electrolyte was placed in a mold having a diameter of 10 mm, and a compacted powder sample was obtained by applying a pressure of about 3 t/cm using a single-axis hydraulic press. The ionic conductivity was calculated from the area, the thickness, and the impedance characteristics at room temperature of the compacted powder sample. The impedance measurement was performed at room temperature with pressure applied. The impedance measurement was performed at a measurement frequency of 10 Hz to 10 MHz, a measurement voltage of 1 Vrms, and no DC bias. The deviation between the electrical lengths of a cable and a measurement jig was offset upon evaluation. For the halide solid electrolyte of Example 1, the ionic conductivity before the pulverization treatment was 1.1 µS/cm, and the ionic conductivity after the pulverization treatment was 5.7 µS/cm.

### (Electronic Conductivity)

The electronic conductivity was calculated from a DC voltage and current characteristics. The electronic conductivity of the halide solid electrolyte of Example 1 was < 1.0 × 10⁻⁸ µS/cm and was a value that could be determined to have no electron-conducting properties.

### (Average Particle Diameter)

The average particle diameter is the value of a median diameter D50 obtained from a volume particle size distribution measured by a laser diffraction scattering particle size distribution measuring device. Specifically, a powder of the halide solid electrolyte was dispersed in an aqueous solution of 0.01 wt% sodium hexametaphosphate with a homogenizer, and then, the particle size distribution of the halide solid electrolyte was measured by a laser diffraction scattering particle size distribution measuring device (trade name: MT3100II, manufactured by MicrotracBEL Corp.) The value of D50 (i.e., cumulative 50% particle diameter) of the measured particle size distribution was regarded as the average particle size. For the halide solid electrolyte of Example 1, the average particle diameter before the pulverization treatment was 0.60 µm, and the average particle diameter after the pulverization treatment was 0.40 µm.

### (BET Specific Surface Area)

The BET specific surface area was determined by the BET multipoint method using a device for the nitrogen gas adsorption method. For the halide solid electrolyte of Example 1, the BET specific surface area before the pulverization treatment was 3.6 m²/g, and the BET specific surface area after the pulverization treatment was 5.3 m²/g.

### (Analysis of Trace Components)

The trace components contained in the halide solid electrolyte were analyzed by EPMA. Specifically, the trace components were analyzed as follows. A sample (powder) of the halide solid electrolyte was attached and fixed to a conductive tape (sample was adhered and fixed in a range of 5 mm × 5 mm), and the composition (quantitative) was investigated through compositional analysis by point analysis or area analysis. Although not confirmed by the X-ray diffraction measurement, it was confirmed that Nb and Ga were contained in the halide solid electrolyte of Example 1. The content ratio of Nb was 0.08 at.%, and the content ratio of Ga was 0.03 at.%.

From the evaluation results of the halide solid electrolyte obtained in Example 1, according to the production method of the present disclosure, a homogeneous halide solid electrolyte was successfully synthesized, and as a result, a high ionic conductivity of 5.7 µS/cm was obtained. This ionic conductivity was at a level equal to or higher than that obtained from synthesis from fluoride raw materials, and with the production method of the present disclosure, a halide solid electrolyte having excellent characteristics was successfully obtained. The electronic conductivity was < 1.0 × 10⁻⁸ µS/cm, and it was confirmed that the halide solid electrolyte was an ionic conductive solid electrolyte having no electron-conducting properties (i.e., having a negligible level of electronic conductivity).

From the X-ray diffraction patterns shown in FIG. 6A and FIG. 6B, it was confirmed that, with the method of Example 1, a halide solid electrolyte including Li₂TiF₆ corresponding to the first crystal phase and Li₃AlF₆ corresponding to the second crystal phase can be obtained. In addition, from these X-ray diffraction patterns, it was confirmed that the halide solid electrolyte obtained in Example 1 had a crystal quality similar to that of the halide solid electrolyte of Comparative Example 1 synthesized by the conventional method, and compositional variations were suppressed compared with the halide solid electrolyte of Comparative Example 1. In addition, for the halide solid electrolyte of Example 1, in the X-ray diffraction pattern after the pulverization treatment, the peak changed to a broader peak than in the X-ray diffraction pattern before the pulverization treatment, and the progress of amorphization was confirmed. However, no new precipitate phase due to the pulverization treatment appeared. The changes in ionic conductivity, average particle diameter, and BET specific surface area before and after the pulverization treatment are as described in the explanation section for each evaluation item. From these results, it can be seen that the pulverization treatment may or may not necessarily be performed depending on the application of the halide solid electrolyte, etc., and the composition and the crystal phase of the halide solid electrolyte almost do not change regardless of the presence or absence of the pulverization treatment, so that excellent characteristics are maintained.

As described above, with the production method of the present disclosure, a halide solid electrolyte containing Li, Ti, M, and X can be produced as a halide solid electrolyte having less compositional variations, etc., and having high ionic conductivity similar to that with a conventional production method, by a normal synthesis process (i.e., without sealing, etc., and in a synthetic environment in atmospheric air). In addition, whereas the cost of halide raw materials is very high, inexpensive oxide raw materials are used in the production method of the present disclosure, so that the production cost of the halide solid electrolyte can be reduced.

### INDUSTRIAL APPLICABILITY

The production method for a halide solid electrolyte according to the present disclosure can be used, for example, as a production method for a solid electrolyte for secondary batteries such as all-solid-state batteries for use in various electronic devices or automobiles.

## Claims

1. A production method for a halide solid electrolyte containing Li, Ti, M, and X, wherein
the M is at least one element selected from the group consisting of metal elements (excluding Li and Ti) and metalloid elements and metal elements,
the X is at least one selected from the group consisting of F, Cl, Br, and I, and
the production method comprises:
(A) performing halogenation treatment on at least one Li source selected from the group consisting of a simple oxide and a simple carbonate of Li, at least one Ti source selected from the group consisting of a simple oxide and a simple carbonate of Ti, and at least one M source selected from the group consisting of a simple oxide and a simple carbonate of M, to obtain a simple halide of Li, a simple halide of Ti, and a simple halide of M, respectively; and
(B) synthesizing the halide solid electrolyte using the simple halide of Li, the simple halide of Ti, and the simple halide of M.

2. The production method for the halide solid electrolyte according to claim 1, wherein the (A) includes:
(A-0) pulverizing at least one selected from the group consisting of the Li source, the Ti source, and the M source; and
(A-1) performing halogenation treatment on the Li source, the Ti source, and the M source after the (A-0), to obtain the simple halide of Li, the simple halide of Ti, and the simple halide of M, respectively.

3. The production method for the halide solid electrolyte according to claim 1, wherein
the halide solid electrolyte includes a first crystal phase represented by the following composition formula (1) and a second crystal phase represented by the following composition formula (2),
composition formula (1): Li₂TiX₆, and
composition formula (2): Li₃MX₆.

4. The production method for the halide solid electrolyte according to claim 1, wherein the M includes Al.

5. The production method for the halide solid electrolyte according to claim 1, wherein the X includes F.

6. The production method for the halide solid electrolyte according to claim 1, wherein the Li source, the Ti source, and the M source are in particle form.

7. The production method for the halide solid electrolyte according to claim 1, wherein
in the (A), the halogenation treatment on the Li source, the Ti source, and the M source is performed by performing heat treatment on a halogen-containing substance having thermal decomposition properties.

8. The production method for the halide solid electrolyte according to claim 7, wherein
the halogen-containing substance is in particle form.

9. The production method for the halide solid electrolyte according to claim 7, wherein
the (A) includes:
(A-1-1) mixing the Li source and a first halogen-containing substance, mixing the Ti source and a second halogen-containing substance, and mixing the M source and a third halogen-containing substance; and
(A-1-2) performing halogenation treatment on the Li source, the Ti source, and the M source by respectively performing heat treatment on a first mixture including the Li source and the first halogen-containing substance, a second mixture including the Ti source and the second halogen-containing substance, and a third mixture including the M source and the third halogen-containing substance, which are obtained in the (A-1-1).

10. The production method for the halide solid electrolyte according to claim 7, wherein
in the (A), a halogen gas is generated by performing heat treatment on a halogen-containing substance, and the halogen gas is brought into contact with the Li source, the Ti source, and the M source, thereby performing the halogenation treatment on the Li source, the Ti source, and the M source.

11. The production method for the halide solid electrolyte according to claim 7, wherein the halogen-containing substance includes an ammonium salt.

12. The production method for the halide solid electrolyte according to claim 11, wherein the ammonium salt includes NH₄F.

13. The production method for the halide solid electrolyte according to claim 7, wherein the halogen-containing substance includes a resin.

14. The production method for the halide solid electrolyte according to claim 13, wherein the resin includes a fluorine resin.

15. The production method for the halide solid electrolyte according to claim 7, wherein the halogen-containing substance includes a substance from which inorganic components generated by thermal decomposition during the heat treatment in the (A), other than halogen elements, are substantially not incorporated into the halide solid electrolyte.

16. The production method for the halide solid electrolyte according to claim 7, wherein
the halogen-containing substance includes a plurality of types of halogen-containing compounds.

17. The production method for the halide solid electrolyte according to claim 1, wherein
in the (A), the halogenation treatment on the Li source, the Ti source, and the M source is performed at a temperature of 150°C or higher.

18. A halide solid electrolyte comprising:
Li;
Ti;
Al;
F; and
at least one selected from the group consisting of P and S.

19. The halide solid electrolyte according to claim 18, wherein
the halide solid electrolyte is in particle form, and
each particle of the halide solid electrolyte comprises a first crystal phase represented by the following composition formula (4) and a second crystal phase represented by the following composition formula (5),
composition formula (4): Li₂TiX₆,
and
composition formula (5): Li₃AlX₆.

20. The halide solid electrolyte according to claim 19, wherein
the halide solid electrolyte comprises an amorphous phase.

21. The halide solid electrolyte according to claim 20, wherein
the amorphous phase is included in a surface layer of each particle of the halide solid electrolyte and has higher ionic conductivity than an interior of the particle.

22. The halide solid electrolyte according to claim 20, wherein
the amorphous phase is included in a surface layer of each particle of the halide solid electrolyte and has lower electronic conductivity than an interior of the particle.

23. The halide solid electrolyte according to claim 18, wherein
at least one selected from the group consisting of the following (1), (2), and (3) is satisfied in an X-ray diffraction pattern obtained by X-ray diffraction measurement of the halide solid electrolyte using Cu-Kα rays,
(1) there is no peak derived from TiF₄,
(2) there is no peak derived from LiF, and
(3) there is no peak derived from AlF₃.

24. A positive electrode material comprising the halide solid electrolyte according to claim 18.

25. A battery comprising a positive electrode including the positive electrode material according to claim 24.

26. A battery comprising:
a positive electrode;
a negative electrode; and
an electrolyte layer provided between the positive electrode and the negative electrode, wherein
at least one selected from the group consisting of the positive electrode, the negative electrode, and the electrolyte layer includes the halide solid electrolyte according to claim 18.
